# EUROPEAN PATENT APPLICATION

(11) **EP 4 668 957 A1**
(43) Date of publication of application: **24.12.2025**
(21) Application number: 24733487.3
(22) Date of filing: 16.02.2024
(51) Int. Cl.: H04W 72/12, H04W 72/21, H04L 5/00, H04W 8/24, H04W 64/00, H04W 84/06

(54) **METHOD, USER EQUIPMENT, PROCESSING DEVICE, AND STORAGE MEDIUM FOR TRANSMITTING UPLINK CHANNEL, AND METHOD AND BASE STATION FOR RECEIVING UPLINK CHANNEL**

(30) Priority: 16.02.2023 US 202363446353 P
(71) Applicant: LG Electronics Inc., Seoul 07336 (KR)
(72) Inventor: BAE, Duckhyun, Seoul 06772 (KR); SHIN, Seokmin, Seoul 06772 (KR); PARK, Haewook, Seoul 06772 (KR)
(74) Representative: Plasseraud IP
(86) International application number: PCT/KR2024/095329
(87) International publication number: WO 2024/172614

(57) **Abstract**

A UE may transmit a UE capability report including a maximum time domain window (TDW) length value for each of a plurality of platform types, receive a configuration including at least one TDW length value related to a physical uplink shared channel (PUSCH), receive scheduling information related to a PUSCH transmission, determine a TDW for demodulation reference signal (DMRS) bundling based on the configuration and the scheduling information, and perform the PUSCH transmission based on the TDW. The UE may perform DMRS bundling maintaining power consistency and phase continuity within the TDW.

## Description

### TECHNICAL FIELD

The disclosure relates to a wireless communication system.

### BACKGROUND

A variety of technologies, such as machine-to-machine (M2M) communication, machine type communication (MTC), and a variety of devices demanding high data throughput, such as smartphones and tablet personal computers (PCs), have emerged and spread. Accordingly, the volume of data throughput demanded to be processed in a cellular network has rapidly increased. In order to satisfy such rapidly increasing data throughput, carrier aggregation technology or cognitive radio technology for efficiently employing more frequency bands and multiple input multiple output (MIMO) technology or multi-base station (BS) cooperation technology for raising data capacity transmitted on limited frequency resources have been developed.

As more and more communication devices have required greater communication capacity, there has been a need for enhanced mobile broadband (eMBB) communication relative to legacy radio access technology (RAT). In addition, massive machine type communication (mMTC) for providing various services at anytime and anywhere by connecting a plurality of devices and objects to each other is one main issue to be considered in next-generation communication.

Communication system design considering services/user equipment (UEs) sensitive to reliability and latency is also under discussion. The introduction of next-generation RAT is being discussed in consideration of eMBB communication, mMTC, ultra-reliable and low-latency communication (URLLC), and the like.

### DISCLOSURE

### Technical Problem

An object of the disclosure is to provide demodulation reference signal (DMRS) bundling suitable for a non-terrestrial network (NTN).

Another object of the disclosure is to provide a time domain window (TDW) for DMRS bundling, which is suitable for an NTN.

The objects to be achieved with the disclosure are not limited to what has been particularly described hereinabove and other objects not described herein will be more clearly understood by persons skilled in the art from the following detailed description.

### Technical Solution

In an aspect of the disclosure, a method of transmitting an uplink channel at a user equipment (UE) in a wireless communication system is provided. The method includes transmitting a UE capability report including a maximum time domain window (TDW) length value for each of a plurality of platform types, receiving a configuration including at least one TDW length value related to a physical uplink shared channel (PUSCH), receiving scheduling information related to a PUSCH transmission, determining a TDW for demodulation reference signal (DMRS) bundling based on the configuration and the scheduling information, and performing the PUSCH transmission based on the TDW. The PUSCH transmission includes a DMRS related to the PUSCH transmission, and DMRS bundling which maintains power consistency and phase continuity is performed within the TDW.

In another aspect of the disclosure, a UE for transmitting an uplink channel in a wireless communication system is provided. The UE includes at least one transceiver, at least one processor, and at least one computer memory operably coupled to the at least one processor and storing instructions which, when executed, cause the at least one processor to perform operations. The operations include transmitting a UE capability report including a maximum TDW length value for each of a plurality of platform types, receiving a configuration including at least one TDW length value related to a PUSCH, receiving scheduling information related to a PUSCH transmission, determining a TDW for DMRS bundling based on the configuration and the scheduling information, and performing the PUSCH transmission based on the TDW. The PUSCH transmission includes a DMRS related to the PUSCH transmission, and DMRS bundling that maintains power consistency and phase continuity is performed within the TDW.

In another aspect of the disclosure, a processing device in a wireless communication system is provided. The processing device includes at least one processor and at least one computer memory operably coupled to the at least one processor and storing instructions which, when executed, cause the at least one processor to perform operations. The operations include transmitting a UE capability report including a maximum TDW length value for each of a plurality of platform types, receiving a configuration including at least one TDW length value related to a PUSCH, receiving scheduling information related to a PUSCH transmission, determining a TDW for DMRS bundling based on the configuration and the scheduling information, and performing the PUSCH transmission based on the TDW. The PUSCH transmission includes a DMRS related to the PUSCH transmission, and DMRS bundling that maintains power consistency and phase continuity is performed within the TDW.

In another aspect of the disclosure, a computer-readable storage medium is provided. The storage medium stores at least one program code including instructions which, when executed, cause at least one processor to perform operations. The operations include transmitting a UE capability report including a maximum TDW length value for each of a plurality of platform types, receiving a configuration including at least one TDW length value related to a PUSCH, receiving scheduling information related to a PUSCH transmission, determining a TDW for DMRS bundling based on the configuration and the scheduling information, and performing the PUSCH transmission based on the TDW. The PUSCH transmission includes a DMRS related to the PUSCH transmission, and DMRS bundling that maintains power consistency and phase continuity is performed within the TDW.

In another aspect of the disclosure, a method of receiving an uplink channel from a UE at a base station (BS) in a wireless communication system is provided. The method includes receiving a UE capability report including a maximum TDW length value for each of a plurality of platform types from the UE, transmitting a configuration including at least one TDW length value related to a PUSCH, transmitting scheduling information related to a PUSCH transmission, determining a TDW for DMRS bundling based on the configuration and the scheduling information, and performing the PUSCH reception based on the TDW. The PUSCH transmission includes a DMRS related to the PUSCH reception, and DMRS bundling that maintains power consistency and phase continuity is performed within the TDW.

In another aspect of the disclosure, a BS for receiving an uplink channel from a UE in a wireless communication system is provided. The BS includes at least one transceiver, at least one processor, and at least one computer memory operably coupled to the at least one processor and storing instructions which, when executed, cause the at least one processor to perform operations. The operations include receiving a UE capability report including a maximum TDW length value for each of a plurality of platform types from the UE, transmitting a configuration including at least one TDW length value related to a PUSCH, transmitting scheduling information related to a PUSCH transmission, determining a TDW for DMRS bundling based on the configuration and the scheduling information, and performing the PUSCH reception based on the TDW. The PUSCH transmission includes a DMRS related to the PUSCH reception, and DMRS bundling that maintains power consistency and phase continuity is performed within the TDW.

In each aspect of the disclosure, the scheduling information may include information regarding one of the at least one TDW length value.

In each aspect of the disclosure, the scheduling information may be included in downlink control information (DCI) carried by a physical downlink control channel (PDCCH).

In each aspect of the disclosure, each of the plurality of platform types may be determined based on a satellite orbit.

In each aspect of the disclosure, ephemeris information regarding the BS may be provided to the UE.

In each aspect of the disclosure, the DMRS bundling may be terminated, while a position of the UE relative to the BS or a position of the BS corresponds to a predetermined position range based on the ephemeris information.

The foregoing solutions are merely a part of the examples of the disclosure and various examples into which the technical features of the disclosure are incorporated may be derived and understood by persons skilled in the art from the following detailed description.

### Advantageous Effects

According to some implementation(s) of the disclosure, DMRS bundling suitable for an NTN may be performed.

According to some implementation(s) of the disclosure, a TDW for DMRS bundling, which is suitable for an NTN, may be determined.

The effects according to the disclosure are not limited to what has been particularly described hereinabove and other effects not described herein will be more clearly understood by persons skilled in the art related to the disclosure from the following detailed description.

### BRIEF DESCRIPTION OF THE DRAWINGS

The accompanying drawings, which are included to provide a further understanding of the disclosure, illustrate examples of implementations of the disclosure and together with the detailed description serve to explain implementations of the disclosure:
FIG. 1 illustrates an example of a communication system 1 to which implementations of the disclosure are applied;
FIG. 2 is a block diagram illustrating examples of communication devices capable of performing a method according to the disclosure;
FIG. 3 illustrates another example of a wireless device capable of performing implementation(s) of the disclosure;
FIG. 4 illustrates an example of a frame structure used in a 3rd generation partnership project (3GPP)-based wireless communication system;
FIG. 5 illustrates a resource grid of a slot;
FIG. 6 illustrates physical channels and a signal transmission/reception procedure using the physical channels in a 3^{rd} generation partnership project based (3GPP-based) communication system as an exemplary wireless communication system;
FIG. 7 illustrates a system information (SI) acquisition procedure;
FIG. 8 illustrates an exemplary initial network access and subsequent communication process;
FIG. 9 illustrates an example of physical downlink shared channel (PDSCH) time domain resource assignment (TDRA) by a physical downlink control channel (PDCCH) and an example of physical uplink shared channel (PUSCH) TDRA by the PDCCH;
FIG. 10 illustrates an exemplary non-terrestrial network (NTN);
FIG. 11 illustrates exemplary cell types supported by satellites;
FIG. 12 illustrates an exemplary orbital parameter-based ephemeris format;
FIG. 13 illustrates the concept of a timing advance (TA);
FIG. 14 illustrates an exemplary uplink channel transmission/reception flow according to some implementations of the disclosure;
FIG. 15 illustrates an exemplary UL signal transmission flow at a UE according to some implementations of the disclosure; and
FIG. 16 illustrates an exemplary UL signal reception flow at a BS according to some implementations of the disclosure.

### DETAILED DESCRIPTION

Hereinafter, implementations according to the disclosure will be described in detail with reference to the accompanying drawings. The detailed description, which will be given below with reference to the accompanying drawings, is intended to explain exemplary implementations of the disclosure, rather than to show the only implementations that may be implemented according to the disclosure. The following detailed description includes specific details in order to provide a thorough understanding of the disclosure. However, it will be apparent to those skilled in the art that the disclosure may be practiced without such specific details.

In this specification, '/' may mean including all of content separated by / (and) or including only part of the separated content (or).

In some instances, known structures and devices may be omitted or may be shown in block diagram form, focusing on important features of the structures and devices, so as not to obscure the concept of the disclosure. The same reference numbers will be used throughout the disclosure to refer to the same or like parts.

A technique, a device, and a system described below may be applied to a variety of wireless multiple access systems. The multiple access systems may include, for example, a code division multiple access (CDMA) system, a frequency division multiple access (FDMA) system, a time division multiple access (TDMA) system, an orthogonal frequency division multiple access (OFDMA) system, a single-carrier frequency division multiple access (SC-FDMA) system, a multi-carrier frequency division multiple access (MC-FDMA) system, etc. CDMA may be implemented by radio technology such as universal terrestrial radio access (UTRA) or CDMA2000. TDMA may be implemented by radio technology such as global system for mobile communications (GSM), general packet radio service (GPRS), enhanced data rates for GSM evolution (EDGE) (i.e., GERAN), etc. OFDMA may be implemented by radio technology such as institute of electrical and electronics engineers (IEEE) 802.11 (Wi-Fi), IEEE 802.16 (WiMAX), IEEE 802.20, evolved-UTRA (E-UTRA), etc. UTRA is part of universal mobile telecommunications system (UMTS) and 3rd generation partnership project (3GPP) long-term evolution (LTE) is part of E-UMTS using E-UTRA. 3GPP LTE adopts OFDMA on downlink (DL) and adopts SC-FDMA on uplink (UL). LTE-advanced (LTE-A) is an evolved version of 3GPP LTE.

For convenience of description, description will be given under the assumption that the disclosure is applied to LTE and/or new RAT (NR). However, the technical features of the disclosure are not limited thereto. For example, although the following detailed description is given based on mobile communication systems corresponding to 3GPP LTE/NR systems, the mobile communication systems are applicable to other arbitrary mobile communication systems except for matters that are specific to the 3GPP LTE/NR system.

For terms and techniques that are not described in detail among terms and techniques used in the disclosure, reference may be made to 3GPP based standard specifications, for example, 3GPP TS 36.211, 3GPP TS 36.212, 3GPP TS 36.213, 3GPP TS 36.321, 3GPP TS 36.300, 3GPP TS 36.331, 3GPP TS 37.213, 3GPP TS 38.211, 3GPP TS 38.212, 3GPP TS 38.213, 3GPP TS 38.214, 3GPP TS 38.300, 3GPP TS 38.304, 3GPP TS 38.331, etc.

In examples of the disclosure described later, if a device "assumes" something, this may mean that a channel transmission entity transmits a channel in compliance with the corresponding "assumption". This also may mean that a channel reception entity receives or decodes the channel in the form of conforming to the "assumption" on the premise that the channel has been transmitted in compliance with the "assumption".

In the disclosure, a user equipment (UE) may be fixed or mobile. Each of various devices that transmit and/or receive user data and/or control information by communicating with a base station (BS) may be the UE. The term UE may be referred to as terminal equipment, mobile station (MS), mobile terminal (MT), user terminal (UT), subscriber station (SS), wireless device, personal digital assistant (PDA), wireless modem, handheld device, etc. In the disclosure, a BS refers to a fixed station that communicates with a UE and/or another BS and exchanges data and control information with a UE and another BS. The term BS may be referred to as advanced base station (ABS), Node-B (NB), evolved Node-B (eNB), base transceiver system (BTS), access point (AP), processing server (PS), etc. Particularly, a BS of a universal terrestrial radio access (UTRAN) is referred to as an NB, a BS of an evolved-UTRAN (E-UTRAN) is referred to as an eNB, and a BS of new radio access technology network is referred to as a gNB. Hereinbelow, for convenience of description, the NB, eNB, or gNB will be referred to as a BS regardless of the type or version of communication technology.

In the disclosure, a node refers to a fixed point capable of transmitting/receiving a radio signal to/from a UE by communication with the UE. Various types of BSs may be used as nodes regardless of the names thereof. For example, a BS, NB, eNB, pico-cell eNB (PeNB), home eNB (HeNB), relay, repeater, etc. may be a node. Furthermore, a node may not be a BS. For example, a radio remote head (RRH) or a radio remote unit (RRU) may be a node. Generally, the RRH and RRU have power levels lower than that of the BS. Since the RRH or RRU (hereinafter, RRH/RRU) is connected to the BS through a dedicated line such as an optical cable in general, cooperative communication according to the RRH/RRU and the BS may be smoothly performed relative to cooperative communication according to BSs connected through a wireless link. At least one antenna is installed per node. An antenna may refer to a physical antenna port or refer to a virtual antenna or an antenna group. The node may also be called a point.

In the disclosure, a cell refers to a specific geographical area in which one or more nodes provide communication services. Accordingly, in the disclosure, communication with a specific cell may mean communication with a BS or a node providing communication services to the specific cell. A DL/UL signal of the specific cell refers to a DL/UL signal from/to the BS or the node providing communication services to the specific cell. A cell providing UL/DL communication services to a UE is especially called a serving cell. Furthermore, channel status/quality of the specific cell refers to channel status/quality of a channel or a communication link generated between the BS or the node providing communication services to the specific cell and the UE. In 3GPP-based communication systems, the UE may measure a DL channel state from a specific node using cell-specific reference signal(s) (CRS(s)) transmitted on a CRS resource and/or channel state information reference signal(s) (CSI-RS(s)) transmitted on a CSI-RS resource, allocated to the specific node by antenna port(s) of the specific node.

A 3GPP-based communication system uses the concept of a cell in order to manage radio resources, and a cell related with the radio resources is distinguished from a cell of a geographic area.

The "cell" of the geographic area may be understood as coverage within which a node may provide services using a carrier, and the "cell" of the radio resources is associated with bandwidth (BW), which is a frequency range configured by the carrier. Since DL coverage, which is a range within which the node is capable of transmitting a valid signal, and UL coverage, which is a range within which the node is capable of receiving the valid signal from the UE, depend upon a carrier carrying the signal, coverage of the node may also be associated with coverage of the "cell" of radio resources used by the node. Accordingly, the term "cell" may be used to indicate service coverage by the node sometimes, radio resources at other times, or a range that a signal using the radio resources may reach with valid strength at other times.

In 3GPP communication standards, the concept of the cell is used in order to manage radio resources. The "cell" associated with the radio resources is defined by a combination of DL resources and UL resources, that is, a combination of a DL component carrier (CC) and a UL CC. The cell may be configured by the DL resources only or by the combination of the DL resources and the UL resources. If carrier aggregation is supported, linkage between a carrier frequency of the DL resources (or DL CC) and a carrier frequency of the UL resources (or UL CC) may be indicated by system information. For example, the combination of the DL resources and the UL resources may be indicated by system information block type 2 (SIB2) linkage. In this case, the carrier frequency may be equal to or different from a center frequency of each cell or CC. When carrier aggregation (CA) is configured, the UE has only one radio resource control (RRC) connection with a network. During RRC connection establishment/re-establishment/handover, one serving cell provides non-access stratum (NAS) mobility information. During RRC connection reestablishment/handover, one serving cell provides security input. This cell is referred to as a primary cell (Pcell). The Pcell refers to a cell operating on a primary frequency on which the UE performs an initial connection establishment procedure or initiates a connection reestablishment procedure. According to UE capability, secondary cells (Scells) may be configured to form a set of serving cells together with the Pcell. The Scell may be configured after completion of RRC connection establishment and used to provide additional radio resources in addition to resources of a specific cell (SpCell). A carrier corresponding to the Pcell on DL is referred to as a downlink primary CC (DL PCC), and a carrier corresponding to the Pcell on UL is referred to as an uplink primary CC (UL PCC). A carrier corresponding to the Scell on DL is referred to as a downlink secondary CC (DL SCC), and a carrier corresponding to the Scell on UL is referred to as an uplink secondary CC (UL SCC).

In a dual connectivity (DC) operation, the term special cell (SpCell) refers to a Pcell of a master cell group (MCG) or a primary secondary cell (PSCell) of a secondary cell group (SCG). The SpCell supports PUCCH transmission and contention-based random access and is always activated. The MCG is a group of service cells associated with a master node (e.g., BS) and includes the SpCell (Pcell) and optionally one or more Scells. For a UE configured with DC, the SCG is a subset of serving cells associated with a secondary node and includes the PSCell and 0 or more Scells. The PSCell is a primary Scell of the SCG. For a UE in RRC_CONNECTED state, that is not configured with CA or DC, only one serving cell including only the Pcell is present. For a UE in RRC_CONNECTED state, that is configured with CA or DC, the term serving cells refers to a set of cells including SpCell(s) and all Scell(s). In DC, two medium access control (MAC) entities, i.e., one MAC entity for the MCG and one MAC entity for the SCG, are configured for the UE.

For a UE that is configured with CA and is not configured with DC, a Pcell PUCCH group (also called a primary PUCCH group) including the Pcell and 0 or more Scells and an Scell PUCCH group (also called a secondary PUCCH group) including only Scell(s) may be configured. For the Scell, an Scell on which a PUCCH associated with the corresponding cell is transmitted (hereinafter, a PUCCH Scell) may be configured. An Scell for which a PUCCH Scell is indicated belongs to the Scell PUCCH group (i.e., the secondary PUCCH group) and PUCCH transmission of related uplink control information (UCI) is performed on the PUCCH Scell. If a PUCCH Scell is not indicated for an Scell or a cell which is indicated for PUCCH transmission for the Scell is a Pcell, the Scell belongs to the Pcell PUCCH group (i.e., the primary PUCCH group) and PUCCH transmission of related UCI is performed on the Pcell. Hereinbelow, if the UE is configured with the SCG and some implementations of the disclosure related to a PUCCH are applied to the SCG, the primary cell may refer to the PSCell of the SCG. If the UE is configured with the PUCCH Scell and some implementations of the disclosure related to the PUCCH are applied to the secondary PUCCH group, the primary cell may refer to the PUCCH Scell of the secondary PUCCH group.

In a wireless communication system, the UE receives information on DL from the BS and the UE transmits information on UL to the BS. The information that the BS and UE transmit and/or receive includes data and a variety of control information and there are various physical channels according to types/usage of the information that the UE and the BS transmit and/or receive.

The 3GPP-based communication standards define DL physical channels corresponding to resource elements carrying information originating from a higher layer and DL physical signals corresponding to resource elements which are used by the physical layer but do not carry the information originating from the higher layer. For example, a physical downlink shared channel (PDSCH), a physical broadcast channel (PBCH), a physical multicast channel (PMCH), a physical control format indicator channel (PCFICH), a physical downlink control channel (PDCCH), etc. are defined as the DL physical channels, and a reference signal (RS) and a synchronization signal are defined as the DL physical signals. The RS, which is also referred to as a pilot, represents a signal with a predefined special waveform known to both the BS and the UE. For example, a demodulation reference signal (DMRS), a channel state information RS (CSI-RS), a positioning reference signal (PRS) and etc. are defined as DL RSs. The 3GPP-based communication standards define UL physical channels corresponding to resource elements carrying information originating from the higher layer and UL physical signals corresponding to resource elements which are used by the physical layer but do not carry the information originating from the higher layer. For example, a physical uplink shared channel (PUSCH), a physical uplink control channel (PUCCH), and a physical random access channel (PRACH) are defined as the UL physical channels, and a DMRS for a UL control/data signal, a sounding reference signal (SRS) used for UL channel measurement, etc. are defined.

In the disclosure, a PDCCH refers to a set of time-frequency resources (e.g., resource elements (REs)) carrying downlink control information (DCI), and a PDSCH refers to a set of time-frequency resources carrying DL data. A PUCCH, a PUSCH, and a PRACH refer to a set of time-frequency resources carrying UCI, a set of time-frequency resources carrying UL data, and a set of time-frequency resources carrying random access signals, respectively. In the following description, "the UE transmits/receives a PUCCH/PUSCH/PRACH" is used as the same meaning that the UE transmits/receives the UCI/UL data/random access signals on or through the PUCCH/PUSCH/PRACH, respectively. In addition, "the BS transmits/receives a PBCH/PDCCH/PDSCH" is used as the same meaning that the BS transmits the broadcast information/DCI/DL data on or through a PBCH/PDCCH/PDSCH, respectively.

In this specification, a radio resource (e.g., a time-frequency resource) scheduled or configured to the UE by the BS for transmission or reception of the PUCCH/PUSCH/PDSCH may be referred to as a PUCCH/PUSCH/PDSCH resource.

Since a communication device receives a synchronization signal (SS), DMRS, CSI-RS, PRS, PBCH, PDCCH, PDSCH, PUSCH, and/or PUCCH in the form of radio signals on a cell, the communication device may not select and receive radio signals including only a specific physical channel or a specific physical signal through a radio frequency (RF) receiver, or may not select and receive radio signals without a specific physical channel or a specific physical signal through the RF receiver. In actual operations, the communication device receives radio signals on the cell via the RF receiver, converts the radio signals, which are RF band signals, into baseband signals, and then decodes physical signals and/or physical channels in the baseband signals using one or more processors. Thus, in some implementations of the disclosure, not receiving physical signals and/or physical channels may mean that a communication device does not attempt to restore the physical signals and/or physical channels from radio signals, for example, does not attempt to decode the physical signals and/or physical channels, rather than that the communication device does not actually receive the radio signals including the corresponding physical signals and/or physical channels.

As more and more communication devices have required greater communication capacity, there has been a need for eMBB communication relative to legacy radio access technology (RAT). In addition, massive MTC for providing various services at anytime and anywhere by connecting a plurality of devices and objects to each other is one main issue to be considered in next-generation communication. Further, communication system design considering services/UEs sensitive to reliability and latency is also under discussion. The introduction of next-generation RAT is being discussed in consideration of eMBB communication, massive MTC, ultra-reliable and low-latency communication (URLLC), and the like. Currently, in 3GPP, a study on the next-generation mobile communication systems after EPC is being conducted. In the disclosure, for convenience, the corresponding technology is referred to a new RAT (NR) or fifth-generation (5G) RAT, and a system using NR or supporting NR is referred to as an NR system.

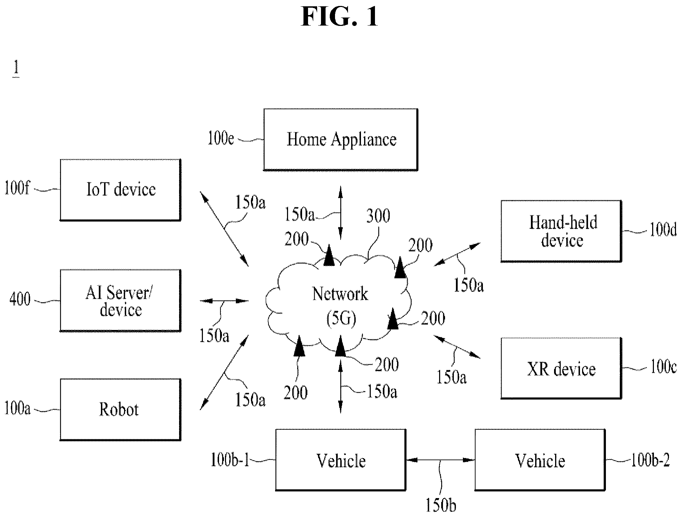

FIG. 1 illustrates an example of a communication system 1 to which implementations of the disclosure are applied. Referring to FIG. 1, the communication system 1 applied to the disclosure includes wireless devices, BSs, and a network. Here, the wireless devices represent devices performing communication using RAT (e.g., 5G NR or LTE (e.g., E-UTRA)) and may be referred to as communication/radio/SG devices. The wireless devices may include, without being limited to, a robot 100a, vehicles 100b-1 and 100b-2, an extended reality (XR) device 100c, a hand-held device 100d, a home appliance 100e, an Internet of Things (IoT) device 100f, and an artificial intelligence (AI) device/server 400. For example, the vehicles may include a vehicle having a wireless communication function, an autonomous driving vehicle, and a vehicle capable of performing vehicle-to-vehicle communication. Here, the vehicles may include an unmanned aerial vehicle (UAV) (e.g., a drone). The XR device may include an augmented reality (AR)/virtual reality (VR)/mixed reality (MR) device and may be implemented in the form of a head-mounted device (HMD), a head-up display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or smartglasses), and a computer (e.g., a notebook). The home appliance may include a TV, a refrigerator, and a washing machine. The IoT device may include a sensor and a smartmeter. For example, the BSs and the network may also be implemented as wireless devices and a specific wireless may operate as a BS/network node with respect to another wireless device.

The wireless devices 100a to 100f may be connected to a network 300 via BSs 200. AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. vehicle-to-vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a and 150b may be established between the wireless devices 100a to 100f and the BSs 200 and between the wireless devices 100a to 100f). Here, the wireless communication/connections such as UL/DL communication 150a and sidelink communication 150b (or, device-to-device (D2D) communication) may be established by various RATs (e.g., 5G NR). The wireless devices and the BSs/wireless devices may transmit/receive radio signals to/from each other through the wireless communication/connections 150a and 150b. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the disclosure.

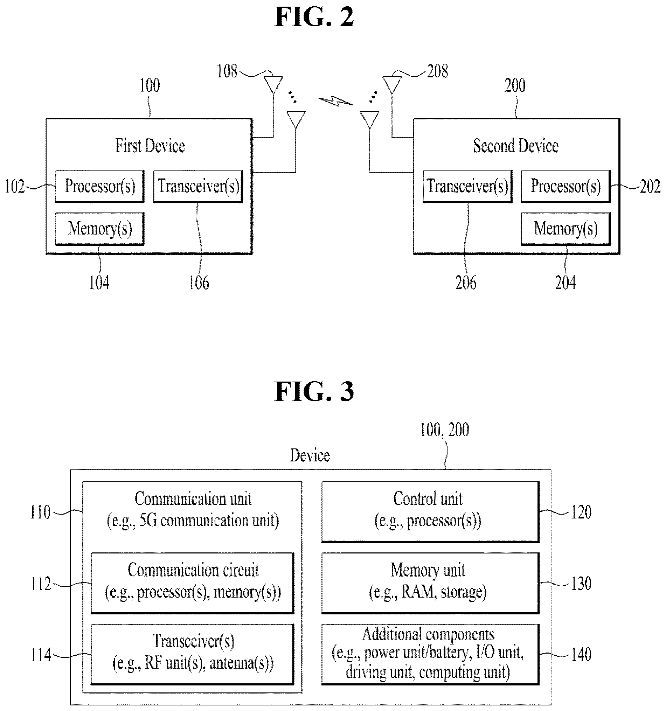

FIG. 2 is a block diagram illustrating examples of communication devices capable of performing a method according to the disclosure. Referring to FIG. 2, a first wireless device 100 and a second wireless device 200 may transmit and/or receive radio signals through a variety of RATs (e.g., LTE and NR). Here, {the first wireless device 100 and the second wireless device 200} may correspond to {the wireless device 100x and the BS 200} and/or {the wireless device 100x and the wireless device 100x} of FIG. 1.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the below-described /proposed functions, procedures, and/or methods. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver(s) 106 and then store information obtained by processing the second information/signals in the memory(s) 104. The memory(s) 104 may be connected to the processor(s) 102 and may store a variety of information related to operations of the processor(s) 102. For example, the memory(s) 104 may perform a part or all of processes controlled by the processor(s) 102 or store software code including instructions for performing the below-described/proposed procedures and/or methods. Here, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 is used interchangeably with radio frequency (RF) unit(s). In the disclosure, the wireless device may represent the communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the below-described/proposed functions, procedures, and/or methods. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may perform a part or all of processes controlled by the processor(s) 202 or store software code including instructions for performing the below-described/proposed procedures and/or methods. Here, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 is used interchangeably with RF unit(s). In the disclosure, the wireless device may represent the communication modem/circuit/chip.

The wireless communication technology implemented in the wireless devices 100 and 200 of the disclosure may include narrowband Internet of things for low-power communication as well as LTE, NR, and 6G. For example, the NB-IoT technology may be an example of low-power wide-area network (LPWAN) technologies and implemented in standards such as LTE Cat NB1 and/or LTE Cat NB2. However, the NB-IoT technology is not limited to the above names. Additionally or alternatively, the wireless communication technology implemented in the wireless devices XXX and YYY of the disclosure may perform communication based on the LTE-M technology. For example, the LTE-M technology may be an example of LPWAN technologies and called by various names including enhanced machine type communication (eMTC). For example, the LTE-M technology may be implemented in at least one of the following various standards: 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M, etc., but the LTE-M technology is not limited to the above names. Additionally or alternatively, the wireless communication technology implemented in the wireless devices XXX and YYY of the disclosure may include at least one of ZigBee, Bluetooth, and LPWAN in consideration of low-power communication, but the wireless communication technology is not limited to the above names. For example, the ZigBee technology may create a personal area network (PAN) related to small/low-power digital communication based on various standards such as IEEE 802.15.4 and so on, and the ZigBee technology may be called by various names.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as a physical (PHY) layer, medium access control (MAC) layer, a radio link control (RLC) layer, a packet data convergence protocol (PDCP) layer, radio resource control (RRC) layer, and a service data adaptation protocol (SDAP) layer). The one or more processors 102 and 202 may generate one or more protocol data units (PDUs) and/or one or more service data units (SDUs) according to the functions, procedures, proposals, and/or methods disclosed in the disclosure. The one or more processors 102 and 202 may generate messages, control information, data, or information according to the functions, procedures, proposals, and/or methods disclosed in the disclosure. The one or more processors 102 and 202 may generate signals (e.g., baseband signals) including PDUs, SDUs, messages, control information, data, or information according to the functions, procedures, proposals, and/or methods disclosed in the disclosure and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the functions, procedures, proposals, and/or methods disclosed in the disclosure.

The one or more processors 102 and 202 may be referred to as controllers, microcontrollers, microprocessors, or microcomputers. The one or more processors 102 and 202 may be implemented by hardware, firmware, software, or a combination thereof. As an example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The functions, procedures, proposals, and/or methods disclosed in the disclosure may be implemented using firmware or software, and the firmware or software may be configured to include the modules, procedures, or functions. Firmware or software configured to perform the functions, procedures, proposals, and/or methods disclosed in the disclosure may be included in the one or more processors 102 and 202 or stored in the one or more memories 104 and 204 so as to be driven by the one or more processors 102 and 202. The functions, procedures, proposals, and/or methods disclosed in the disclosure may be implemented using firmware or software in the form of code, commands, and/or a set of commands.

The one or more memories 104 and 204 may be connected to the one or more processors 102 and 202 and store various types of data, signals, messages, information, programs, code, commands, and/or instructions. The one or more memories 104 and 204 may be configured by read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of the disclosure, to one or more other devices. The one or more transceivers 106 and 206 may receive user data, control information, and/or radio signals/channels, mentioned in the functions, procedures, proposals, methods, and/or operational flowcharts disclosed in the disclosure, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208. The one or more transceivers 106 and 206 may be configured to transmit and receive user data, control information, and/or radio signals/channels, mentioned in the functions, procedures, proposals, methods, and/or operational flowcharts disclosed in the disclosure, through the one or more antennas 108 and 208. In the disclosure, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

FIG. 3 illustrates another example of a wireless device capable of performing implementation(s) of the disclosure. Referring to FIG. 3, wireless devices 100 and 200 may correspond to the wireless devices 100 and 200 of FIG. 2 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 2. For example, the transceiver(s) 114 may include the one or more transceivers 106 and 206 and/or the one or more antennas 108 and 208 of FIG. 2. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 1), the vehicles (100b-1 and 100b-2 of FIG. 1), the XR device (100c of FIG. 1), the hand-held device (100d of FIG. 1), the home appliance (100e of FIG. 1), the IoT device (100f of FIG. 1), a digital broadcast UE, a hologram device, a public safety device, an MTC device, a medicine device, a fintech device (or a finance device), a security device, a climate/environment device, the AI server/device (400 of FIG. 1), the BS (200 of FIG. 1), a network node, etc. The wireless device may be used in a mobile or fixed place according to a use-case/service.

In FIG. 3, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an electronic control unit (ECU), a graphical processing unit, and a memory control processor. As another example, the memory 130 may be configured by a random access memory (RAM), a dynamic RAM (DRAM), a read-only memory (ROM)), a flash memory, a transitory memory, a non-transitory memory, and/or a combination thereof.

In the disclosure, the at least one memory (e.g., 104 or 204) may store instructions or programs, and the instructions or programs may cause, when executed, at least one processor operably connected to the at least one memory to perform operations according to some embodiments or implementations of the disclosure.

In the disclosure, a computer readable (non-transitory) storage medium may store at least one instruction or program, and the at least one instruction or program may cause, when executed by at least one processor, the at least one processor to perform operations according to some embodiments or implementations of the disclosure.

In the disclosure, a processing device or apparatus may include at least one processor, and at least one computer memory operably connected to the at least one processor. The at least one computer memory may store instructions or programs, and the instructions or programs may cause, when executed, the at least one processor operably connected to the at least one memory to perform operations according to some embodiments or implementations of the disclosure.

In the disclosure, a computer program may include program code stored on at least one computer-readable (non-transitory) storage medium and, when executed, configured to perform operations according to some implementations of the disclosure or cause at least one processor to perform the operations according to some implementations of the disclosure. The computer program may be provided in the form of a computer program product. The computer program product may include at least one computer-readable (non-transitory) storage medium.

A communication device of the disclosure includes at least one processor; and at least one computer memory operably connected to the at least one processor and configured to store instructions for causing, when executed, the at least one processor to perform operations according to example(s) of the disclosure described later.

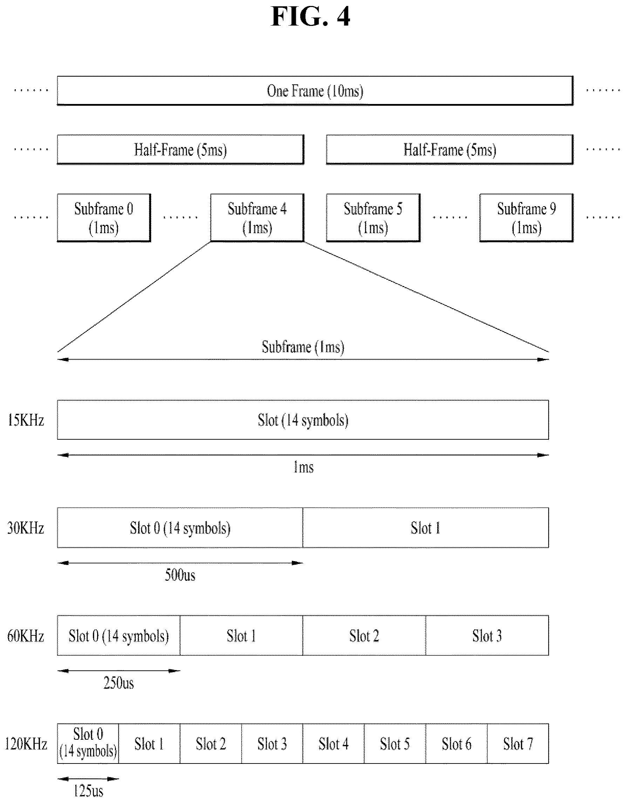

FIG. 4 illustrates an example of a frame structure used in a 3GPP-based wireless communication system.

The frame structure of FIG. 4 is purely exemplary and the number of subframes, the number of slots, and the number of symbols, in a frame, may be variously changed. In an NR system, different OFDM numerologies (e.g., subcarrier spacings (SCSs)) may be configured for multiple cells which are aggregated for one UE. Accordingly, the (absolute time) duration of a time resource including the same number of symbols (e.g., a subframe, a slot, or a transmission time interval (TTI)) may be differently configured for the aggregated cells. Here, the symbol may include an OFDM symbol (or cyclic prefix - OFDM (CP-OFDM) symbol) and an SC-FDMA symbol (or discrete Fourier transform-spread-OFDM (DFT-s-OFDM) symbol). In the disclosure, the symbol, the OFDM-based symbol, the OFDM symbol, the CP-OFDM symbol, and the DFT-s-OFDM symbol are used interchangeably.

Referring to FIG. 4, in the NR system, UL and DL transmissions are organized into frames. Each frame has a duration of T_{f} = (△fₘₐₓ*N_{f}/100)*T_{c} = 10 ms and is divided into two half-frames of 5 ms each. A basic time unit for NR is T_{c} = 1/(△fₘₐₓ*N_{f}) where △fₘₐₓ = 480*10³ Hz and N_{f}= 4096. For reference, a basic time unit for LTE is Tₛ = 1/(△f_{ref}*N_{f,ref}) where △f_{ref} = 15*10³ Hz and N_{f,ref}= 2048. Tₛ and T_{c} have the relationship of a constant κ = Tₛ/T_{c} = 64. Each half-frame includes 5 subframes and a duration T_{sf} of a single subframe is 1 ms. Subframes are further divided into slots and the number of slots in a subframe depends on a subcarrier spacing. Each slot includes 14 or 12 OFDM symbols based on a cyclic prefix. In a normal CP, each slot includes 14 OFDM symbols and, in an extended CP, each slot includes 12 OFDM symbols. The numerology depends on an exponentially scalable subcarrier spacing △f = 2^{u}*15 kHz. The table below shows the number of OFDM symbols (*N*^{slot}_{symb}) per slot, the number of slots (*N*^{frame,u}ₛₗₒₜ) per frame, and the number of slots (*N*^{subframe,u}ₛₗₒₜ) per subframe.

**Table 1**

| u | *N*^{slot}_{symb} | *N*^{frame,u}ₛₗₒₜ | *N*^{subframe,u}ₛₗₒₜ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

The table below shows the number of OFDM symbols per slot, the number of slots per frame, and the number of slots per subframe, according to the subcarrier spacing △f = 2^{u}*15 kHz.

**Table 2**

| u | *N*^{slot}_{symb} | *N*^{frame,u}ₛₗₒₜ | *N*^{subframe,u}ₛₗₒₜ |
|---|---|---|---|
| 2 | 12 | 40 | 4 |

For a subcarrier spacing configuration u, slots may be indexed within a subframe in ascending order as follows: n^{u}ₛ ∈ {0, ..., n^{subframe,u}ₛₗₒₜ - 1} and indexed within a frame in ascending order as follows: n^{u}_{s,f} ∈ {0, ..., n^{frame,u}ₛₗₒₜ - 1}.

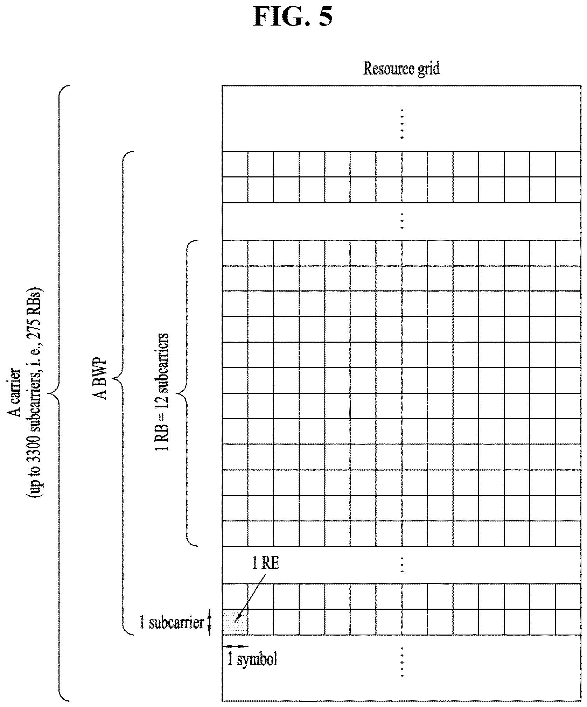

FIG. 5 illustrates a resource grid of a slot. The slot includes multiple (e.g., 14 or 12) symbols in the time domain. For each numerology (e.g., subcarrier spacing) and carrier, a resource grid of *N*^{size,u}_{grid,x}**N*^{RB}_{sc} subcarriers and *N*^{subframe,u}_{symb} OFDM symbols is defined, starting at a common resource block (CRB) *N*^{start,u}_{grid} indicated by higher layer signaling (e.g. RRC signaling), where *N*^{size,u}_{grid,x} is the number of resource blocks (RBs) in the resource grid and the subscript x is DL for downlink and UL for uplink. *N*^{RB}_{sc} is the number of subcarriers per RB. In the 3GPP-based wireless communication system, *N*^{RB}_{sc} is typically 12. There is one resource grid for a given antenna port *p,* a subcarrier spacing configuration *u,* and a transmission link (DL or UL). The carrier bandwidth *N*^{size,u}_{grid} for the subcarrier spacing configuration *u* is given to the UE by a higher layer parameter (e.g. RRC parameter). Each element in the resource grid for the antenna port *p* and the subcarrier spacing configuration *u* is referred to as a resource element (RE) and one complex symbol may be mapped to each RE. Each RE in the resource grid is uniquely identified by an index *k* in the frequency domain and an index *l* representing a symbol location relative to a reference point in the time domain. In the NR system, an RB is defined by 12 consecutive subcarriers in the frequency domain. In the NR system, RBs are classified into CRBs and physical resource blocks (PRBs). The CRBs are numbered from 0 upwards in the frequency domain for the subcarrier spacing configuration *u.* The center of subcarrier 0 of CRB 0 for the subcarrier spacing configuration *u* is equal to 'Point A' which serves as a common reference point for RB grids. The PRBs for subcarrier spacing configuration *u* are defined within a bandwidth part (BWP) and numbered from 0 to *N*^{size,u}_{BWP,i}-1, where i is a number of the BWP. The relation between a PRB n_{PRB} in a BWP i and a CRB n^{u}_{CRB} is given by: n^{u}_{PRB} = n^{u}_{CRB} + *N*^{size,u}_{BWP,i}, where *N*^{size}_{BWP,i}; is a CRB in which the BWP starts relative to CRB 0. The BWP includes a plurality of consecutive RBs in the frequency domain. For example, the BWP may be a subset of contiguous CRBs defined for a given numerology uᵢ in the BWP i on a given carrier. A carrier may include a maximum of N (e.g., 5) BWPs. The UE may be configured to have one or more BWPs on a given component carrier. Data communication is performed through an activated BWP and only a predetermined number of BWPs (e.g., one BWP) among BWPs configured for the UE may be active on the component carrier.

For each serving cell in a set of DL BWPs or UL BWPs, the network may configure at least an initial DL BWP and one (if the serving cell is configured with uplink) or two (if supplementary uplink is used) initial UL BWPs. The network may configure additional UL and DL BWPs. For each DL BWP or UL BWP, the UE may be provided the following parameters for the serving cell: i) an SCS; ii) a CP; iii) a CRB *N*^{start}_{BWP} = *O*_{carrier} + *RB*ₛₜₐᵣₜ and the number of contiguous RBs *N*^{size}_{BWP} = L_{RB} provided by an RRC parameter *locationAndBandwidth,* which indicates an offset *RB*ₛₑₜ and a length *L*_{RB} as a resource indicator value (RIV) on the assumption of *N*^{start}_{BWP} = 275, and a value *O*_{carrier} provided by an RRC parameter *offsetToCarrier* for the SCS; an index in the set of DL BWPs or UL BWPs; a set of BWP-common parameters; and a set of BWP-dedicated parameters.

Virtual resource blocks (VRBs) may be defined within the BWP and indexed from 0 to *N*^{size,u}_{BWP,i}-1, where i denotes a BWP number. The VRBs may be mapped to PRBs according to interleaved mapping or non-interleaved mapping. In some implementations, VRB n may be mapped to PRB n for non-interleaved VRB-to-PRB mapping.

NR frequency bands are defined as two types of frequency ranges, i.e., FR1 and FR2. FR2 is also referred to as millimeter wave (mmW). The following table shows frequency ranges within which NR may operate.

**Table 3**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

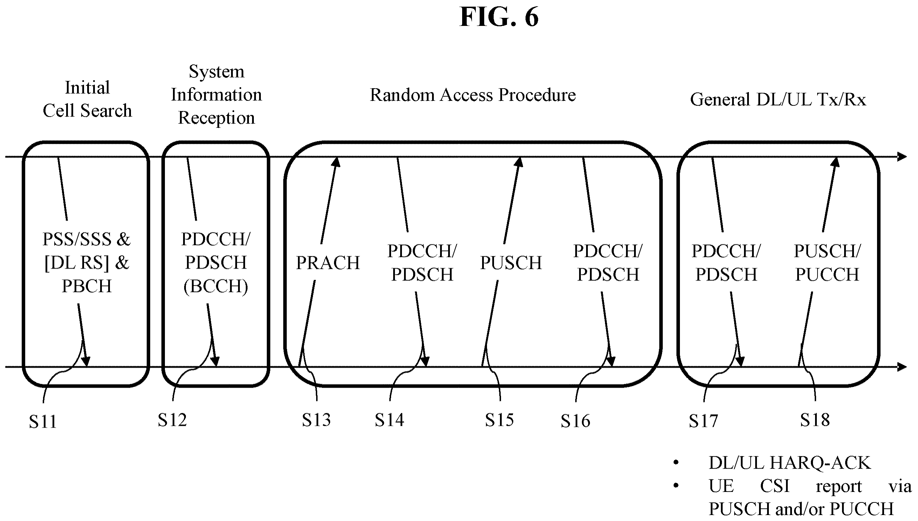

FIG. 6 is a diagram illustrating physical channels and a signal transmission/reception procedure using the physical channels in a 3GPP-based communication system as an exemplary wireless communication system.

When the UE is powered on or when the UE has been disconnected from the wireless communication system, the UE searches for a cell to camp on and performs initial cell search involving synchronization with a BS in the cell (S11). For the initial cell search, the UE receives a synchronization signal block (SSB) (also referred to as a SSB/PBCH block) from the BS. The SSB includes a primary synchronization signal (PSS), a secondary synchronization signal (SSS), and a physical broadcast channel (PBCH). The UE establishes synchronization with the BS based on the PSS/SSS and acquires information such as a cell identity (ID). The UE may acquire broadcast information in a cell based on the PBCH. The UE may receive a DL reference signal (RS) in an initial cell search procedure to monitor a DL channel status.

After initial cell search, the UE may camp on the cell. Subsequently, the UE may monitor a PDCCH in the cell and acquire more specific system information by receiving a PDSCH based on DCI carried on the PDCCH (S12).

Subsequently, to complete connection to the BS, the UE may perform a random access procedure (S13 to S16). In the random access procedure, for example, the UE may transmit a preamble on a PRACH (S13) and receive a PDCCH and a random access response (RAR) for the preamble on a PDSCH corresponding to the PDCCH (S14). When the UE fails in receiving the RAR directed to the UE, the UE may attempt to retransmit the preamble. In the case of contention-based random access, the UE may transmit a PUSCH based on a UL resource assignment included in the RAR (S15), and perform a contention resolution procedure including reception of a PDCCH and a PDSCH corresponding to the PDCCH (S16).

After the above procedure, the UE may receive a PDCCH/PDSCH from the BS (S17) and transmit a PUSCH/PUCCH to the BS (S18) in a general UL/DL signal transmission procedure. Control information that the UE transmits to the BS is generically called uplink control information (UCI). The UCI includes a hybrid automatic repeat and request acknowledgement/negative acknowledgement (HARQ ACK/NACK), a scheduling request (SR), and channel state information (CSI). The CSI includes a channel quality indicator (CQI), a precoding matrix indicator (PMI), and/or a rank indication (RI). In general, UCI is transmitted on the PUCCH. However, when control information and data should be transmitted simultaneously, the control information may be transmitted on the PUSCH. In addition, the UE may transmit the UCI aperiodically on the PUSCH, upon receipt of a request/command from a network.

During initial cell selection, the UE assumes that a half-frame carrying an SSB is repeated with a periodicity of 20ms. Based on an MIB, the UE may identify whether there is a control resource set (CORESET) (e.g. CORESET#0) for a Type0-PDCCH common search space (CSS). When k_{SSB} <= 23 (for FR1) or k_{SSB} <= 11 (for FR2), the UE may determine that there is a CORESET for the Type0-PDCCH CSS. When k_{SSB} > 23 (for FR1) or k_{SSB} > 11 (for FR2), the UE may determine that there is no CORESET for the Type0-PDCCH CSS. The Type0-PDCCH CSS is a type of PDCCH search space and is used to transmit a PDCCH that schedules a system information (SI) message. In the presence of the Type0-PDCCH CSS, the UE may determine (i) a plurality of contiguous RBs and one or more contiguous symbols included in the CORESET (e.g., CORESET#0) and (ii) a PDCCH occasion (i.e., a time-domain position for receiving a PDCCH) (e.g., search space #0), based on information (e.g., pdcch-ConfigSIB1) in the MIB. In the absence of the Type0-PDCCH CSS, pdcch-ConfigSIB1 provides information about a frequency position at which an SSB/SIB1 is present and a frequency range in which the SSB/SIB1 is not present.

Beam sweeping means that a transmission and reception point (TRP) (e.g., BS/cell) changes a beam (direction) of a radio signal over time. In the disclosure, beam and beam direction may be used interchangeably. An SSB may be transmitted periodically by beam sweeping. In this case, an SSB index is implicitly linked to an SSB beam. The SSB beam may be changed on an SSB (index) or SSB (index) group basis. In the latter case, the SSB beam is maintained the same within an SSB (index) group. That is, the transmission beam direction of an SSB may be repeated in a plurality of consecutive SSBs. A set of SSBs are transmitted in a 5-ms half-frame. A set of SSBs transmitted in a 5-ms half-frame of an SSB transmission is called an SSB burst set. A maximum number Lₘₐₓ of SSBs transmitted in an SSB burst set has a value of 4, 8, or 64 depending on a frequency band to which a carrier belongs.

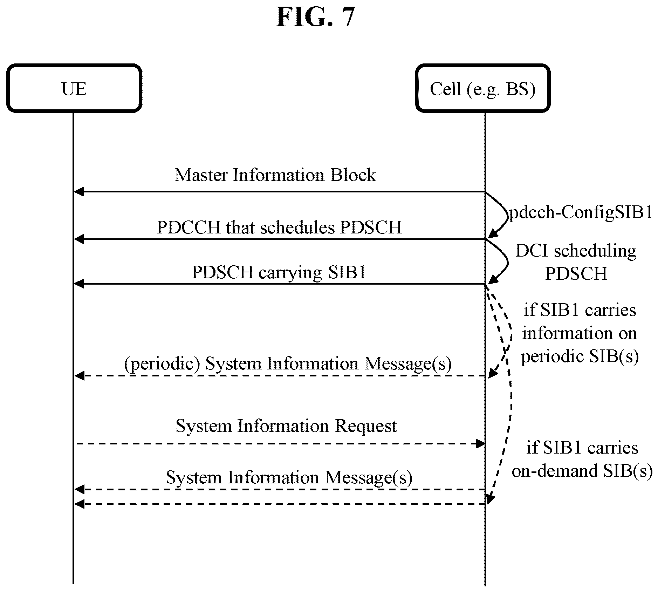

FIG. 7 illustrates a system information (SI) acquisition procedure. The UE may acquire access stratum/non-access stratum (AS/NAS) information from the SI acquisition procedure. The SI acquisition procedure may be applied to UEs in the following states: RRC_IDLE, RRC_INACTIVE, and RRC_CONNECTED. RRC_CONNECTED refers to a state in which the UE has established an RRC connection with the network. RRC_IDLE refers to a state in which the UE is not registered in a specific cell and does not receive AS context and other information from the network. RRC_INACTIVE refers to a state in which the UE remains in a state called CM-CONNECTED where the UE has a signaling connection with the core network for connection management (CM) and is capable of moving within an area defined by the radio access network (RAN) (e.g., BS(s)) without notifying the RAN. CM_CONNECTED refers to a state in which the UE has a NAS signaling connection with the core network. CM_IDLE refers to a state in which the UE has no NAS signaling connection.

In the 3GPP based system, system information (SI) may be classified into a master information block (MIB) and a plurality of system information blocks (SIBs). MIB and a plurality of SIBs are divided into minimum system information (SI) and other SI, where the minimum SI is comprised of MIB and SystemInformationBlock1 (SIB1) and comprises basic information required for initial access and information for acquiring any other SI. SIB1 may be referred to as remaining minimum system information (RMSI). The details may be found in the following.
- The MIB is always transmitted on the BCH with a periodicity of 80 ms and repetitions made within 80 ms. The MIB includes information/parameters related to SIB1 reception and is transmitted through the PBCH in the SSB. During initial cell selection, the UE assumes that a half-frame including SSB(s) is repeated with a periodicity of 20 ms. The UE may determine based on the MIB whether there is a control resource set (CORESET) for a Type0-PDCCH common search space. The Type0-PDCCH common search space is a kind of PDCCH search space and used to transmit a PDCCH that schedules an SI message. When the Type0-PDCCH common search space exists, the UE may determine based on information in the MIB (e.g., pdcch-ConfigSIB1) (i) a plurality of consecutive RBs and one or more consecutive symbols included in a CORESET and (ii) a PDCCH occasion (i.e., a time-domain position for PDCCH reception). When there is no Type0-PDCCH common search space, pdcch-ConfigSIB1 provides information regarding a frequency position where the SSB/SIB1 exists and information regarding a frequency range where the SSB/SIB1 does not exist.
- The SIB1 is transmitted on the downlink shared channel (DL-SCH) with a periodicity of 160 ms and variable transmission repetition periodicity within 160 ms. The default transmission repetition periodicity of SIB1 is 20 ms but the actual transmission repetition periodicity is up to network implementation. SIB1 includes information regarding availability and scheduling (e.g., transmission periodicity and SI-window size) of the remaining SIBs (hereinafter referred to as SIBx, where x is an integer greater than and equal to 2). For example, SIB1 may indicate whether SIBx is periodically broadcast or provided at the request of the UE in an on-demand way. When SIBx is provided in an on-demand way, SIB1 may include information necessary for the UE to perform an SI request. SIB1 is a cell-specific SIB. A PDCCH that schedules SIB1 is transmitted in the Type0-PDCCH common search space, and SIB1 is transmitted through a PDSCH indicated by the PDCCH.
- SIBx is included in the SI message and transmitted through the PDSCH. Each SI message is transmitted within a periodically occurring time window (i.e., SI-window).

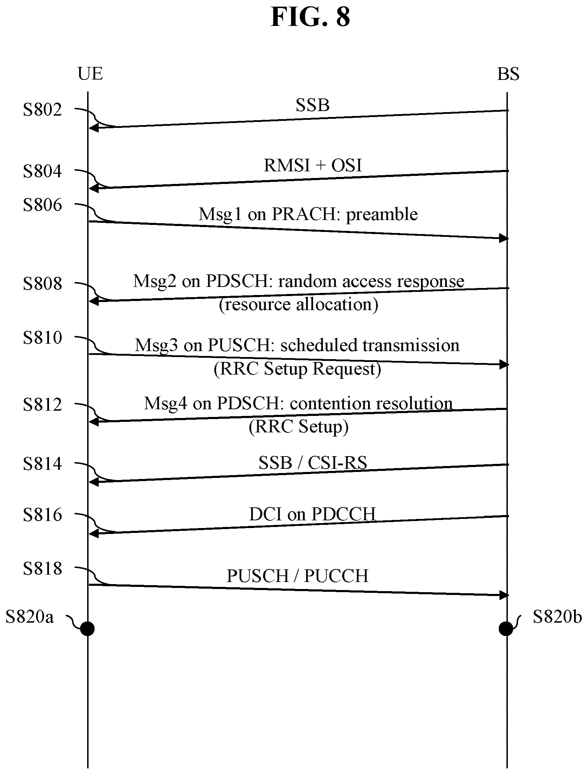

FIG. 8 illustrates an exemplary initial network access and subsequent communication process. In a 3GPP-based system, particularly NR, a physical channel and an RS may be transmitted by beamforming. When beamforming-based signal transmission is supported, a beam management process may be performed for beam alignment between a BS and a UE. Further, a signal/channel described herein may be transmitted/received by beamforming. Beam alignment may be performed based on an SSB in RRC_IDLE, whereas beam alignment may be performed based on a CSI-RS (on DL) and an SRS (on UL) in RRC_CONNECTED. When beamforming-based signal transmission is not supported, a beam-related operation may be skipped in the following description.

Referring to FIG. 8, a network (e.g., BS) may periodically transmit an SSB (S802). The SSB includes a PSS/SSS/PBCH. The SSB may be transmitted by beam sweeping. The PBCH may include an MIB, which may include RMSI scheduling-related information. Subsequently, the BS may transmit RMSI and other system information (OSI) (S804). It may include information (e.g., PRACH configuration information) required for a UE to initially access the BS. For example, information about RACH occasions (i.e., PRACH occasions) related to SSBs on a cell may be provided. For example, the UE may be provided with the number N of SSBs related to one PRACH occasion and the number R of contention-based preambles per SSB in each valid PRACH occasion. A PRACH occasion is time-frequency resources in which a PRACH preamble is transmittable. When N < 1, one SSB is mapped to 1/N consecutive valid PRACH occasions, and R contention-based preambles having consecutive indexes related to SSBs per valid PRACH occasion start from preamble index 0. When N >= 1, R contention-based preambles having consecutive indexes related to SSB n per valid PRACH occasion start from preamble index n*N^{total}_{preamble}/N where n*N^{total}_{preamble}/N is an integer multiple of N and provided by higher-layer signaling (such as system information or a cell-specific or UE-dedicated RRC configuration). The UE may select an SSB having an SSB-based measured reference signal received power (RSRP) greater than a threshold from among SSBs received on a cell, and transmit an RACH preamble through a PRACH related to the selected SSB (S806). The beam direction of the RACH preamble is associated with a PRACH resource. Association between PRACH resources (and/or RACH preambles) and SSBs (SSB indexes) may be configured by system information (e.g., RMSI). The BS may identify each RA preamble by a time/frequency resource (RA occasion (RO)) carrying the RA preamble, and a preamble index (PI). Upon receipt of the RA preamble from the UE, the BS transmits a random access response (RAR) message to the UE on a PDSCH (S808). To receive the RAR message, the UE monitors an L1/L2 control channel (PDCCH) with a cyclic redundancy check (CRC) masked with a random access-RNTI (RA-RNTI), including scheduling information for the RAR message, within a preconfigured time window (e.g., ra-ResponseWindow). When receiving scheduling information on the PDCCH masked with the RA-RNTI, the UE may receive an RAR message on a PDSCH indicated by the scheduling information. The UE then checks whether there is an RAR directed to the UE in the RAR message. The presence or absence of the RAR directed to the UE may be determined by checking whether there is a random access preamble ID (RAPID) for the preamble transmitted by the UE. The index of the preamble transmitted by the UE may be identical to the RAPID. The RAR includes the index of the corresponding RA preamble, timing offset information (e.g., timing advance command (TAC)) for UL synchronization, UL scheduling information (e.g., UL grant) for Msg3 transmission, and UE temporary identification information (e.g., temporary-C-RNTI (TC-RNTI)). Upon receipt of the RAR, the UE transmits Msg3 on a PUSCH according to the UL scheduling information and the timing offset value in the RAR (S810). Msg3 may include the ID (or global ID) of the UE. Further, Msg3 may include RRC connection request-related information (e.g., RRCSetupRequest message) for initial access to the network. After receiving Msg3, the BS transmits a contention resolution message, that is, Msg4 to the UE (S812). When the UE receives the contention resolution message and succeeds in contention resolution, the TC-RNTI is changed to a C-RNTI. Msg4 may include the ID of the UE/RRC connection-related information (e.g., an RRCSetup message). When information transmitted in Msg3 does not match information received in Msg4 or when the UE has not received Msg4 for a predetermined time, the UE may determine that the contention resolution has failed and retransmit Msg3.

Although FIG. 8 illustrates a 4-step random access process (S808 to S812), a 2-step random access process (not shown) is also available. The NR system may require lower latency than the legacy system. Particularly for a latency-sensitive service such as URLLC, the 4-step random access procedure may not be preferable. A low-latency random access procedure may be needed for various scenarios in the NR system. When implementation(s) of the disclosure are realized along with a random access procedure, the implementation(s) of the disclosure may be carried out together with the following 2-step random access procedure to reduce latency involved in the random access procedure. A low-latency random access procedure may be needed for various scenarios in the NR system. When implementation(s) of the disclosure are realized along with a random access procedure, the implementation(s) of the disclosure may be carried out together with the following 2-step random access procedure to reduce latency involved in the random access procedure. The 2-step random access procedure may be performed in two steps: transmission of MsgA from the UE to the BS and transmission of MsgB from the BS to the UE. The MsgA transmission may include transmission of an RA preamble on a PRACH and transmission of UL payload on a PUSCH. In the MsgA transmission, the PRACH and the PUSCH may be transmitted in time division multiplexing (TDM). Alternatively, the PRACH and the PUSCH may be transmitted in frequency division multiplexing (FDM) in the MsgA transmission. Upon receipt of MsgA, the BS may transmit MsgB to the UE. MsgB may include an RAR for the UE. An RRC connection request-related message (e.g., RRCSetupRequest message) requesting establishment of a connection between the RRC layer of the BS and the RRC layer of the UE may be included in the payload of MsgA. In this case, MsgB may be used to transmit RRC connection-related information (e.g., RRCSetup message). In contrast, the RRC connection request-related message (e.g., RRCSetupRequest message) may be transmitted on a PUSCH based on a UL grant in MsgB. In this case, RRC connection-related information (e.g., RRCSetup message) related to the RRC connection request may be transmitted on a PDSCH associated with the PUSCH transmission after the PUSCH transmission based on MsgB.

When an RRC connection is established between the BS and the UE through the RACH process, that is, the random access process, subsequent beam alignment may be performed based on an SSB/CSI-RS (on DL) and an SRS (on UL). For example, the UE may receive an SSB/CSI-RS (S814). The SSB/CSI-RS may be used for the UE to generate a beam/CSI report. The BS may request a beam/CSI report from the UE through DCI (S816). In this case, the UE may generate a beam/CSI report based on the SSB/CSI-RS and transmit the generated beam/CSI report to the BS through a PUSCH/PUCH (S818). The beam/CSI report may include beam measurement results, information about a preferred beam, and so on. The BS and the UE may switch beams based on the beam/CSI report (S820a and S820b).

Subsequently, the UE and the BS may process information included in the memory to transmit a radio signal or process a received radio signal and store it in the memory according to some implementations of the disclosure, based on configuration information obtained in the network access process (e.g., the system information acquisition process, the RACH-based RRC connection process, and so on). The radio signal may include at least one of a PDCCH, a PDSCH, or an RS on DL, and at least one of a PUCCH, a PUSCH, or an SRS on UL.

Hereinafter, physical channels that may be used in the 3GPP-based wireless communication system will be described in detail.

A PDCCH carries DCI. For example, the PDCCH (i.e., DCI) carries information about transport format and resource allocation of a downlink shared channel (DL-SCH), information about resource allocation of an uplink shared channel (UL-SCH), paging information about a paging channel (PCH), system information about the DL-SCH, information about resource allocation for a control message, such as a random access response (RAR) transmitted on a PDSCH, of a layer (hereinafter, higher layer) positioned higher than a physical layer among protocol stacks of the UE/BS, a transmit power control command, information about activation/deactivation of configured scheduling (CS), etc. DCI including resource allocation information on the DL-SCH is called PDSCH scheduling DCI, and DCI including resource allocation information on the UL-SCH is called PUSCH scheduling DCI. The DCI includes a cyclic redundancy check (CRC). The CRC is masked/scrambled with various identifiers (e.g., radio network temporary identifier (RNTI)) according to an owner or usage of the PDCCH. For example, if the PDCCH is for a specific UE, the CRS is masked with a UE identifier (e.g., cell-RNTI (C-RNTI)). If the PDCCH is for a paging message, the CRC is masked with a paging RNTI (P-RNTI). If the PDCCH is for system information (e.g., system information block (SIB)), the CRC is masked with a system information RNTI (SI-RNTI). If the PDCCH is for a random access response, the CRC is masked with a random access-RNTI (RA-RNTI).

When a PDCCH on one serving cell schedules a PDSCH or a PUSCH on another serving cell, it is referred to cross-carrier scheduling. Cross-carrier scheduling with a carrier indicator field (CIF) may allow a PDCCH on a serving cell to schedule resources on another serving cell. When a PDSCH on a serving cell schedules a PDSCH or a PUSCH on the serving cell, it is referred to as self-carrier scheduling. When the cross-carrier scheduling is used in a cell, the BS may provide information about a cell scheduling the cell to the UE. For example, the BS may inform the UE whether a serving cell is scheduled by a PDCCH on another (scheduling) cell or scheduled by the serving cell. If the serving cell is scheduled by the other (scheduling) cell, the BS may inform the UE which cell signals DL assignments and UL grants for the serving cell. In the disclosure, a cell carrying a PDCCH is referred to as a scheduling cell, and a cell where transmission of a PUSCH or a PDSCH is scheduled by DCI included in the PDCCH, that is, a cell carrying the PUSCH or PDSCH scheduled by the PDCCH is referred to as a scheduled cell.

A PDSCH is a physical layer UL channel for UL data transport. The PDSCH carries DL data (e.g., DL-SCH transport block) and is subjected to modulation such as quadrature phase shift keying (QPSK), 16 quadrature amplitude modulation (QAM), 64 QAM, 256 QAM, etc. A codeword is generated by encoding a transport block (TB). The PDSCH may carry a maximum of two codewords. Scrambling and modulation mapping per codeword may be performed and modulation symbols generated from each codeword may be mapped to one or more layers. Each layer is mapped to a radio resource together with a DMRS and generated as an OFDM symbol signal. Then, the OFDM symbol signal is transmitted through a corresponding antenna port.

For UL-SCH data transmission, the UE should include UL resources available for the UE and, for DL-SCH data reception, the UE should include DL resources available for the UE. The UL resources and the DL resources are assigned to the UE by the BS through resource allocation. Resource allocation may include time domain resource allocation (TDRA) and frequency domain resource allocation (FDRA). In the disclosure, UL resource allocation is also referred to as a UL grant and DL resource allocation is referred to as DL assignment. The UL grant is dynamically received by the UE on the PDCCH or in RAR or semi-persistently configured for the UE by the BS through RRC signaling. DL assignment is dynamically received by the UE on the PDCCH or semi-persistently configured for the UE by the BS through RRC signaling.

On UL, the BS may dynamically allocate UL resources to the UE through PDCCH(s) addressed to a cell radio network temporary Identifier (C-RNTI). The UE monitors the PDCCH(s) in order to discover possible UL grant(s) for UL transmission. The BS may allocate the UL resources using a configured grant to the UE. Two types of configured grants, Type 1 and Type 2, may be used. In Type 1, the BS directly provides the configured UL grant (including periodicity) through RRC signaling. In Type 2, the BS may configure a periodicity of an RRC-configured UL grant through RRC signaling and signal, activate, or deactivate the configured UL grant through the PDCCH addressed to a configured scheduling RNTI (CS-RNTI). For example, in Type 2, the PDCCH addressed to the CS-RNTI indicates that the corresponding UL grant may be implicitly reused according to the configured periodicity through RRC signaling until deactivation.

On DL, the BS may dynamically allocate DL resources to the UE through PDCCH(s) addressed to the C-RNTI. The UE monitors the PDCCH(s) in order to discover possible DL grant(s). The BS may allocate the DL resources to the UE using SPS. The BS may configure a periodicity of configured DL assignment through RRC signaling and signal, activate, or deactivate the configured DL assignment through the PDCCH addressed to the CS-RNTI. For example, the PDCCH addressed to the CS-RNTI indicates that the corresponding DL assignment may be implicitly reused according to the configured periodicity through RRC signaling until deactivation.

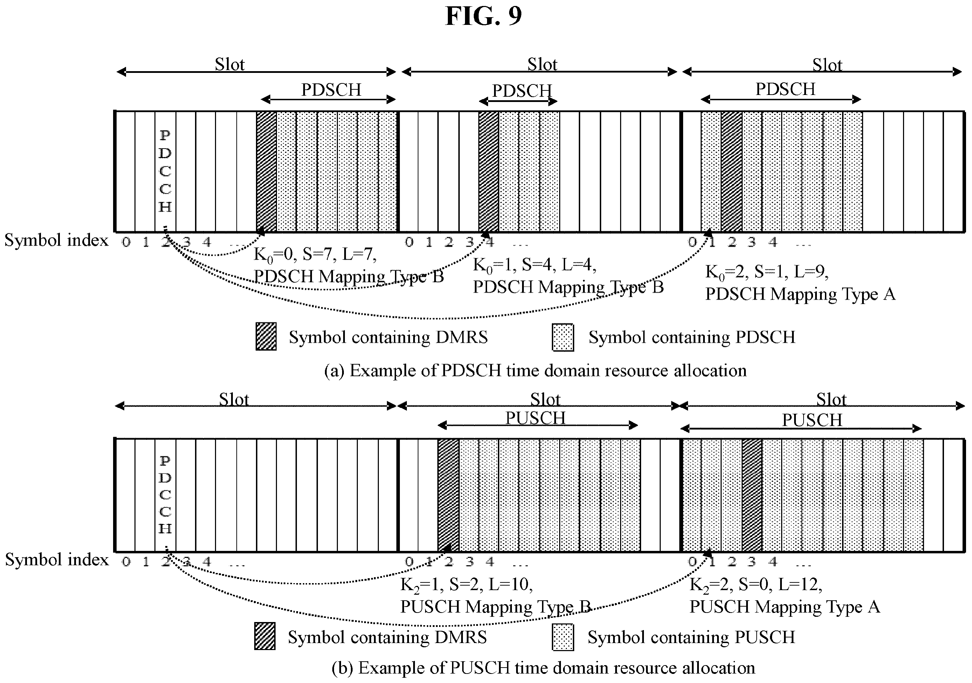

FIG. 9 illustrates an example of PDSCH TDRA caused by a PDCCH and an example of PUSCH TDRA caused by the PDCCH.

DCI carried by the PDCCH in order to schedule a PDSCH or a PUSCH includes a TDRA field. The TDRA field provides a value m for a row index m+1 to an allocation table for the PDSCH or the PUSCH. Predefined default PDSCH time domain allocation is applied as the allocation table for the PDSCH or a PDSCH TDRA table that the BS configures through RRC signaled *pdsch-TimeDomainAllocationList* is applied as the allocation table for the PDSCH. Predefined default PUSCH time domain allocation is applied as the allocation table for the PUSCH or a PUSCH TDRA table that the BS configures through RRC signaled *pusch-TimeDomainAllocationList* is applied as the allocation table for the PUSCH. The PDSCH TDRA table to be applied and/or the PUSCH TDRA table to be applied may be determined according a fixed/predefined rule (e.g., refer to 3GPP TS 38.214).

In PDSCH time domain resource configurations, each indexed row defines a DL assignment-to-PDSCH slot offset *K*₀, a start and length indicator *SLIV* (or directly, a start position (e.g., start symbol index *S*) and an allocation length (e.g., the number of symbols, *L*) of the PDSCH in a slot), and a PDSCH mapping type. In PUSCH time domain resource configurations, each indexed row defines a UL grant-to-PUSCH slot offset *K*₂, a start position (e.g., start symbol index S) and an allocation length (e.g., the number of symbols, *L*) of the PUSCH in a slot, and a PUSCH mapping type. *K*₀ for the PDSCH and *K*₂ for the PUSCH indicate the difference between the slot with the PDCCH and the slot with the PDSCH or PUSCH corresponding to the PDCCH. *SLIV* denotes a joint indicator of the start symbol S relative to the start of the slot with the PDSCH or PUSCH and the number of consecutive symbols, *L,* counting from the symbol *S.* There are two PDSCH/PUSCH mapping types: one is mapping type A and the other is mapping type B. In the case of PDSCH/PUSCH mapping type A, a DMRS is mapped to a PDSCH/PUSCH resource with respect to the start of a slot. One or two of the symbols of the PDSCH/PUSCH resource may be used as DMRS symbol(s) according to other DMRS parameters. For example, in the case of PDSCH/PUSCH mapping type A, the DMRS is located in the third symbol (symbol #2) or the fourth symbol (symbol #3) in the slot according to RRC signaling. In the case of PDSCH/PUSCH mapping type B, a DMRS is mapped with respect to the first OFDM symbol of a PDSCH/PUSCH resource. One or two symbols from the first symbol of the PDSCH/PUSCH resource may be used as DMRS symbol(s) according to other DMRS parameters. For example, in the case of PDSCH/PUSCH mapping type B, the DMRS is located at the first symbol allocated for the PDSCH/PUSCH. In the disclosure, the PDSCH/PUSCH mapping type may be referred to as a mapping type or a DMRS mapping type. For example, in this specification, PUSCH mapping type A may be referred to as mapping type A or DMRS mapping type A, and PUSCH mapping type B may be referred to as mapping type B or DMRS mapping type B.

The scheduling DCI includes an FDRA field that provides assignment information about RBs used for the PDSCH or the PUSCH. For example, the FDRA field provides information about a cell for PDSCH or PUSCH transmission to the UE, information about a BWP for PDSCH or PUSCH transmission, and/or information about RBs for PDSCH or PUSCH transmission.

A CORESET, which is a set of time-frequency resources on which the UE is capable of monitoring a PDCCH, may be defined and/or configured. The CORESET has a time duration of one to three OFDM symbols and includes a set of PRBs. The PRBs included in the CORESET and the CORESET duration may be provided to the UE through higher layer (e.g., RRC) signaling. The UE may monitor a set of PDCCH candidates in configured CORESET(s) according to corresponding search space sets. In the disclosure, monitoring implies decoding (blind decoding) of each PDCCH candidate based on monitored DCI formats. The MIB on a PBCH provides the UE with parameters (e.g., CORESET #0 configuration) for monitoring a PDCCH that schedules a PDSCH carrying SIB1. The PBCH may indicate that there is no associated SIB1. In this case, the UE may be provided with not only a frequency range where the UE is allowed to assume that there is no SSB associated with SSB1 but also may be provided with another frequency range where the UE is allowed to discover an SSB associated with SIB1. CORESET #0, which is a CORESET for scheduling at least SIB1, may be configured through the MIB or dedicated RRC signaling.

One or more CORESETs may be configured for the UE, and a plurality of CORESETs may overlap in the time/frequency domain. Parameters for configuring a CORESET may be provided by the BS.

The UE may monitor PDCCH candidates in one or more SS sets in a slot according to the configuration of the CORESET/SS set. An occasion (e.g., time/frequency resource) to monitor PDCCH candidates is defined as a PDCCH (monitoring) occasion. One or more PDCCH (monitoring) occasions may be configured within a slot.

To achieve wider coverage or provide a wireless communication service to a place where it is not easy to install a BS for wireless communication, the use of a non-terrestrial network (NTN) service is under consideration. An NTN refers to a network or a segment of a network, which uses radio frequency (RF) resources loaded on a satellite (or unmanned aerial system (UAS) platform). While a traditional terrestrial network (TN) service provides a wireless communication service to UEs by placing a corresponding BS on the ground, an NTN service provides a wireless communication service to UEs by placing a BS on a non-ground location such as an artificial satellite (in a geostationary orbit, a low earth orbit, a medium earth orbit, or the like), an airplane, an unmanned airship, a drone, and so on. NTN scenarios include high altitude platform station (HAPS) and air to ground (ATG) scenarios. In some scenarios, for the NTN service, frequency division duplex (FDD) is mainly considered (but time division duplex (TDD) is not completely ruled out), and it is assumed that a UE has a GNSS capability.

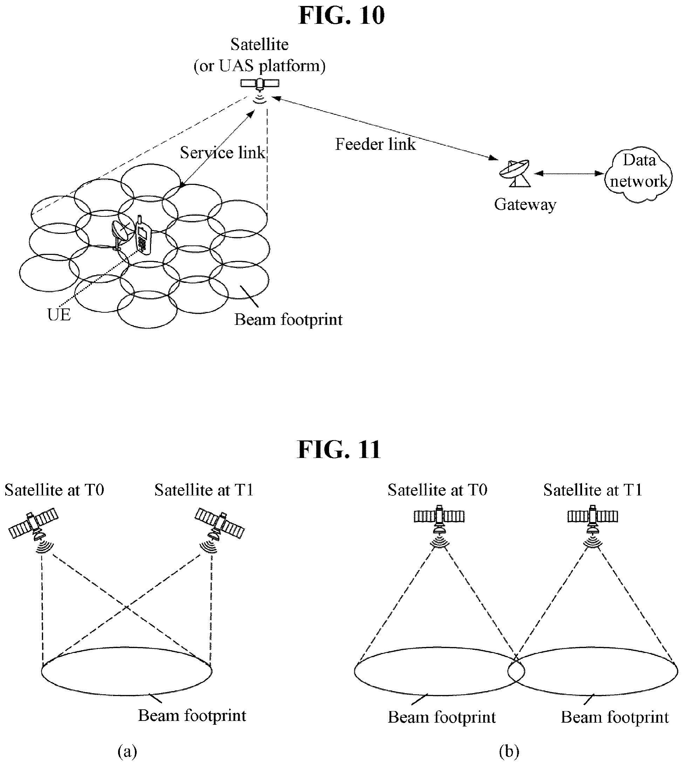

FIG. 10 illustrates an exemplary NTN. As illustrated in FIG. 10, the NTN typically includes the following elements.
> One or several satellite gateways that connect the NTN to a public data network.
   >> A GEO satellite is fed by one or several gateways which are deployed across satellite targeted coverage (e.g., regional or continental coverage). It is assumed that UEs in a cell are served by a gateway.
   >> A non-GEO satellite is served successively by one or several gateways at a time. This system ensures service and feeder link continuity between successive serving gateways during a sufficient time duration to proceed with mobility anchoring and handover.
> A feeder link or radio link between a gateway and the satellite
> A service link or radio link between the UE and the satellite.
> A satellite (or UAS platform) which may implement either a transparent or regenerative (with on board processing) payload. The satellite (or UAS platform) typically generates several beams over a given service area bounded by its field of view. The footprints of the beams are typically elliptical in shape. The field of view of the satellite (or UAS platform) depends on an on-board antenna diagram and a minimum elevation angle.
   >> A transparent payload: It performs radio frequency filtering, frequency conversion, and amplification. Hence, a waveform signal repeated by the payload is unchanged.
   >> A regenerative payload: It performs radio frequency filtering, frequency conversion, and amplification as well as demodulation/decoding, switching and/or routing, and coding/modulation. This is equivalent to having all or part of BS functions (e.g., a BS) on board the satellite (or UAS platform).
> Inter-satellite links (ISL) are optional in case of a constellation of satellites. This requires regenerative payloads on board the satellites. ISL may operate in RF frequency or optical bands.
> UEs are served by the satellite (or UAS platform) within the targeted service area.

In the disclosure, a feeder link is a wireless link between an NTN gateway and an NTN payload, and a service link is a wireless link between the NTN payload and a UE. The NTN gateway (e.g., the gateway of FIG. 10) is an earth station located on the surface of the earth, which provides connectivity to the NTN payload using the feeder link, and the NTN payload is a network node on the satellite or HAPS, which provides connectivity functionality between the service link and the feeder link.

There may be different types of satellites (or UAS platforms). The following table illustrates the types of NTN platforms.

**Table 4**

| Platforms | Altitude range | Orbit | Typical beam footprint size |
|---|---|---|---|
| Low-Earth Orbit (LEO) satellite | 300 - 1500 km | Circular around the earth | 100 - 1000 km |
| Medium-Earth Orbit (MEO) satellite | 7000 - 25000 km | | 100 - 1000 km |
| Geostationary Earth Orbit (GEO) satellite | 35 786 km | notional station keeping position fixed in terms of elevation/azimuth with respect to a given earth point | 200 - 3500 km |
| UAS platform (including HAPS) | 8 - 50 km (20 km for HAPS) | | 5 - 200 km |
| High Elliptical Orbit (HEO) satellite | 400 - *50000* km | Elliptical around the earth | 200 - 3500 km |

Typically, a GEO satellite and a UAS are used to provide continental, regional, or local services, while a constellation of LEO and MEO satellites are used to provide services in both the Northern and Southern Hemispheres. In some cases, the constellation provides global coverage including polar regions.

FIG. 11 illustrates cell types supported by satellites. Particularly, FIG. 11(a) illustrates an earth-fixed cell, and FIG. 11(b) illustrates an earth-moving cell.

Referring to FIG. 11(a), in the case of an earth-fixed cell, the cell is maintained permanently or for a specific service time on a specific earth surface within a location on the earth based on a beam steering function of a satellite. Referring to FIG. 11(b), for an earth-moving cell, the beam steering function of the satellite is not used, and the cell is serviced with a fixed beam and continuously moves on the surface of the earth.

A frequency band considered for the NTN service is mainly a 2GHz band (L-band: 1 to 2GHz and S-band: 2 to 4GHz) at or below 6GHz, and DL 20GHz and UL 30GHz bands (Ka-band: 26.5 to 40GHz) above 6GHz.

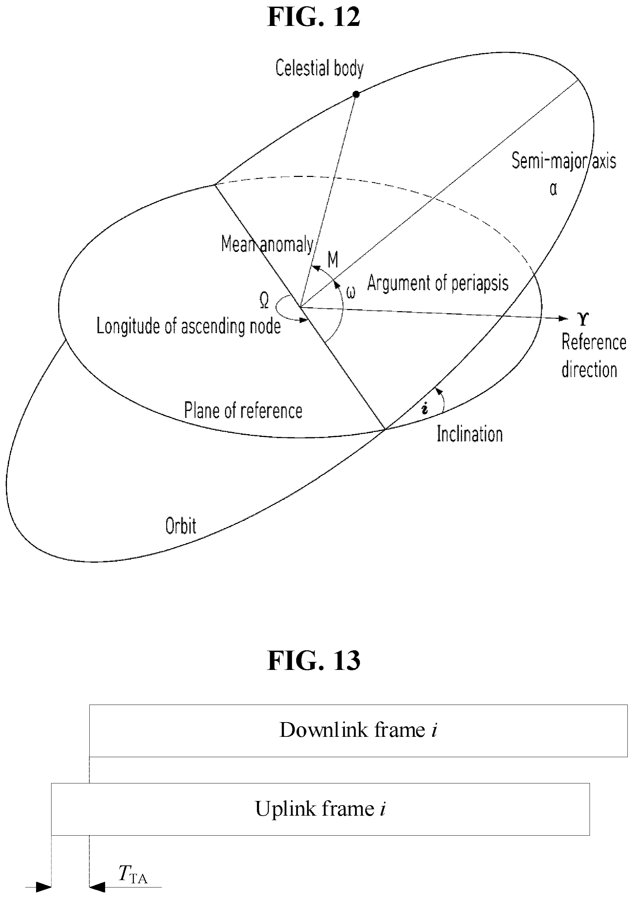

FIG. 12 illustrates an exemplary an orbital parameter-based ephemeris format.

One of key concepts in the NTN is that NTN cells are provided by non-geostationary orbit (NGSO) satellites that orbit periodically around the earth. Each satellite has its own orbit, which is included in its ephemeris information. Based on the satellite ephemeris information, the network may predict feeder link switchover and manage UE mobility and radio resource control. A BS providing NTN access may provide UE(s) with orbital trajectory information or ephemeris information about coordinates for an NTN payload. For the ephemeris information, there may be, for example, the following two ephemeris formats.
> Position and velocity state vector ephemeris format: 132 bits (<17 bytes)
   >> The field size for position (x, y, z) [m] is 78 bits
   >> The field size for velocity (vx, vy, vz) [m/s] is 54 bits.
> The orbital parameter ephemeris format (see FIG. 12): 164 bits (<21 bytes).
   >> Semi-major axis "α" (m) is 33 bits.
   >> Eccentricity "e" is 20 bits.
   >> Argument of periapsis "ω" (rad) is 28 bits.
   >> Longitude of ascending node "Ω" (rad) is 28 bits.
   >> Inclination "i" (rad) is 27 bits.
   >> Mean anomaly "M" (rad) at epoch time to is 28 bits.

FIG. 13 illustrates the concept of a timing advance (TA).

A TA is used to adjust a UL frame timing based on a DL frame timing. Referring to FIG. 13, UL frame i to be transmitted from a UE starts earlier than the beginning of a corresponding DL frame by T_{TA} at the UE.

The foregoing descriptions (e.g., the NR frame structure, the NTN system, the HARQ-ACK codebook determination, and so on) may be applied in combination with some implementations of the disclosure described later or used to clarify implementations of the disclosure.

In an NTN environment, the distance between the UE and the BS may change continuously. Therefore, a TA and UL power control used for UL transmission by the UE may need to be continuously updated, taking into account a relative position between the UE and the BS. In the current standards (e.g., 3GPP TS 38.211 Rel-17, 3GPP TS 38.213 Rel-17, 3GPP TS 38.214 Rel-17, and so on), continuous pre-compensation of a TA and transmission power takes place at the UE to compensate the TA and the transmission power dependent on this relative position. Since the pre-compensation may cause a change in transmission power and a transmission timing, it may inevitably result in power inconsistency and phase discontinuity in transmission of the UE.

DMRS bundling at a transmitter has been discussed to improve reception performance at a receiver in the NTN environment. DMRS bundling is a technique of transmitting the same or coherent DMRS in multiple time slots, for coverage enhancement. To enable improved channel estimation, a UE supporting DMRS bundling maintains phase continuity and power consistency across, for example, PUSCH transmissions or PUCCH repetitions. The receiver performs joint channel estimation on DMRSs received in multiple time slots to improve the accuracy of the channel estimation and enhance coverage. DMRS bundling may also be applied in conjunction with channel repetition in which a channel carrying the same data or information is repeatedly transmitted. In some implementations described below, DMRS bundling may refer to DMRS bundling with or without channel repetition.

When a UE experiences power inconsistency or phase discontinuity at some time point during a period in which transmission is performed through DMRS bundling, it may result in degraded reception performance if the BS bundles a DMRS transmitted to the UE before the time point with a DMRS transmitted to the UE after the time point. Accordingly, a method of identifying DMRSs available for bundling is required.

The following tables are extractions of clause 6.1.7 of 3GPP TS 38.214 Rel-17 regarding a UE procedure for determining a time domain window (TDW) for DMRS bundling.

**Table 5**

| | | | |
|---|---|---|---|
| 6.1.7 UE procedure for determining time domain windows for bundling DM-RS | | | |
| For PUSCH transmissions of PUSCH repetition Type A scheduled by DCI format 0_1 or 0_2, PUSCH repetition Type A with a configured grant, PUSCH repetition Type B and TB processing over multiple slots, when *PUSCH-DMRS-Bundling* is enabled, and for PUCCH transmissions of PUCCH repetition, when *PUCCH-DMRS-Bundling* is enabled, the UE determines one or multiple nominal TDWs, as follows: | | | |
| | - For PUSCH transmissions of repetition Type A, PUSCH repetition Type B and TB processing over multiple slots, the duration of each nominal TDW except the last nominal TDW, in number of consecutive slots, is: | | |
| | | - Given by PUSCH-TimeDomainWindowLength, if configured. | |
| | | - Computed as min *(maxDurationDMRS-Bundling,* M), if PUSCH-TimeDomainWindowLength is not configured, where *maxDurationDMRS-Bundling* is maximum duration for a nominal TDW subject to UE capability [13, TS 38.306], M is the time duration in consecutive slots of *N* · K PUSCH transmissions, and where: | |
| | | | - For PUSCH transmissions of PUSCH repetition Type A, N=1 and K is the number of repetitions, as defined in Clause 6.1.2.1 or in Clause 6.1.2.3. |
| | | | - For PUSCH transmissions of PUSCH repetition Type B, N=1 and K is the number of nominal repetitions, as defined in Clause 6.1.2.1 or in Clause 6.1.2.3. |
| | | | - For PUSCH transmissions of TB processing over multiple slots, N is the number of slots used for TBS determination and K is the number of repetitions of the number of slots N used for TBS determination, as defined in Clause 6.1.2.1 or in Clause 6.1.2.3. |
| | - For PUCCH transmissions of PUCCH repetition, the duration of each nominal TDW except the last nominal TDW, in number of consecutive slots, is: | | |
| | | - Given by PUCCH-TimeDomainWindowLength, if configured. | |
| | | - Computed as min (*maxDurationDMRS-Bundling,* M), if PUCCH-TimeDomainWindowLength is not configured, where | |
| | | | *maxDurationDMRS-Bundling* is maximum duration for a nominal TDW subject to UE capability [13, TS 38.306], M is the time duration in consecutive slots from the first slot determined for PUCCH transmissions of PUCCH repetition to the last slot determined for PUCCH transmissions of PUCCH repetition according to clause 9.2.6 of [6, TS 38.213]. |
| | | - For PUSCH transmission of a PUSCH repetition Type A scheduled by DCI format 0_1 or 0_2 and PUSCH repetition Type A with a configured grant, when *AvailableSlotCounting* is enabled, and for TB processing over multiple slots: | |
| | | | - The start of the first nominal TDW is the first slot determined for the first PUSCH transmission. |
| | | | - The end of the last nominal TDW is the last slot determined for the last PUSCH transmission. |
| | | | - The start of any other nominal TDWs is the first slot determined for PUSCH transmission after the last slot determined for PUSCH transmission of a previous nominal TDW. |
| | | - For PUSCH transmissions of a PUSCH repetition type A scheduled by DCI format 0_1 or 0_2 and PUSCH repetition Type A with a configured grant, when the UE is not configured with *AvailableSlotCounting* or when *AvailableSlotCounting* is disabled, and for PUSCH repetition type B: | |
| | | | - The start of the first nominal TDW is the first slot for the first PUSCH transmission. |
| | | | - The end of the last nominal TDW is the last slot for the last PUSCH transmission. |
| | | | - The start of any other nominal TDWs is the first slot after the last slot of a previous nominal TDW. |
| | | - For PUCCH transmissions of a PUCCH repetition: | |
| | | | - The start of the first nominal TDW is the first slot determined for the first PUCCH transmission. |
| | | | - The end of the last nominal TDW is the last slot determined for the last PUCCH transmission. |
| | | | - The start of any other nominal TDWs is the first slot determined for PUCCH transmission after the last slot determined for PUCCH transmission of a previous nominal TDW. |

**Table 6**

| | | |
|---|---|---|
| 6.1.7 UE procedure for determining time domain windows for bundling DM-RS | | |
| | | ... |
| For PUSCH transmissions of a PUSCH repetition Type A scheduled by DCI format 0_1 or 0_2, PUSCH repetition Type A with a configured grant, PUSCH repetition Type B and TB processing over multiple slots, a nominal TDW consists of one or multiple actual TDWs. The UE determines the actual TDWs as follows: | | |
| | - The start of the first actual TDW is the first symbol of the first PUSCH transmission in a slot for PUSCH transmission of PUSCH repetition type A scheduled by DCI format 0_1 or 0_2, or PUSCH repetition Type A with a configured grant, or PUSCH repetition type B or TB processing over multiple slots within the nominal TDW. | |
| | - The end of an actual TDW is | |
| | | - The last symbol of the last PUSCH transmission in a slot for PUSCH transmission of PUSCH repetition type A scheduled by DCI format 0_1 or 0_2, or PUSCH repetition Type A with a configured grant, or PUSCH repetition type B or TB processing over multiple slots within the nominal TDW, if the actual TDW reaches the end of the last PUSCH transmission within the nominal TDW. |
| | | - The last symbol of a PUSCH transmission before the event, if an event occurs which causes power consistency and phase continuity not to be maintained across PUSCH transmissions of PUSCH repetition type A scheduled by DCI format 0_1 or 0_2, or PUSCH repetition Type A with a configured grant, or PUSCH repetition type B or TB processing over multiple slots within the nominal TDW, and the PUSCH transmission is in a slot for PUSCH transmission of PUSCH repetition type A scheduled by DCI format 0_1 or 0_2, or PUSCH repetition Type A with a configured grant, or PUSCH repetition type B or TB processing over multiple slots. |
| | - When *pusch-WindowRestart* is enabled, the start of a new actual TDW is the first symbol of the PUSCH transmission after the event which causes power consistency and phase continuity not to be maintained across PUSCH transmissions of PUSCH repetition type A scheduled by DCI format 0_1 or 0_2, or PUSCH repetition Type A with a configured grant, or PUSCH | |
| | | repetition type B or TB processing over multiple slots within the nominal TDW, and the PUSCH transmission is in a slot for PUSCH transmission of PUSCH repetition type A scheduled by DCI format 0_1 or 0_2, or PUSCH repetition Type A with a configured grant, or PUSCH repetition type B or TB processing over multiple slots. |
| For PUCCH transmissions of PUCCH repetition, a nominal TDW consists of one or multiple actual TDWs. The UE determines the actual TDWs as follows: | | |
| | - The start of the first actual TDW is the first symbol of the first PUCCH transmission in a slot determined for PUCCH transmission within the nominal TDW. | |
| | - The end of an actual TDW is | |
| | | - The last symbol of the last PUCCH transmission in a slot determined for transmission of the PUCCH within the nominal TDW, if the actual TDW reaches the end of the last PUCCH transmission within the nominal TDW. |
| | | - The last symbol of a PUCCH transmission before the event, if an event occurs which causes power consistency and phase continuity not be maintained across PUCCH transmissions of PUCCH repetition within the nominal TDW, and the PUCCH transmission is in a slot determined for transmission of the PUCCH. |
| | - When *pucch- WindowRestart* is enabled, the start of a new actual TDW is the first symbol of the PUCCH transmission after the event which causes power consistency and phase continuity not to be maintained across PUCCH transmissions of PUCCH repetition within the nominal TDW, and the PUCCH transmission is in a slot determined for transmission of the PUCCH. | |

**Table 7**

| | | |
|---|---|---|
| 6.1.7 UE procedure for determining time domain windows for bundling DM-RS | | |
| | ... | |
| Events which cause power consistency and phase continuity not to be maintained across PUSCH transmissions of PUSCH repetition type A scheduled by DCI format 0_1 or 0_2, or PUSCH repetition Type A with a configured grant, or PUSCH repetition type B or TB processing over multiple slots, or PUCCH transmissions of PUCCH repetition, within the nominal TDW, are: | | |
| | - A downlink slot or downlink reception or downlink monitoring based on *tdd-UL-DL-ConfigurationCommon* and *tdd-UL-DL-ConfigurationDedicated* for unpaired spectrum. | |
| | - The gap between any two consecutive PUSCH transmissions, or the gap between any two consecutive PUCCH transmissions, exceeds 13 symbols for normal cyclic prefix or exceeds 11 symbols for extended cyclic prefix. | |
| | - The gap between any two consecutive PUSCH transmissions, or the gap between any two consecutive PUCCH transmissions, does not exceed 13 symbols but other uplink transmissions are scheduled between the two consecutive PUSCH transmissions or the two consecutive PUCCH transmissions. | |
| | - For PUSCH transmissions of PUSCH repetition type A, or PUSCH repetition type B or TB processing over multiple slots, a dropping or cancellation of a PUSCH transmission according to clause 9, clause 11.1 and clause 11.2A of [6, TS 38.213]. | |
| | - For PUCCH transmissions of PUCCH repetition, a dropping or cancellation of a PUCCH transmission according to clause 9, clause 9.2.6 and clause 11.1 of [6, TS 38.213]. | |
| | - For any two consecutive PUSCH transmissions of PUSCH repetition type A, or PUSCH repetition type B, and when two SRS resource sets are configured in *srs-ResourceSetToAddModList* or *srs-ResourceSetToAddModListDCI-0-2* with higher layer parameter *usage* in *SRS-ResourceSet* set to 'codebook' or 'noncodebook', a different SRS resource set association is used for the two PUSCH transmissions of PUSCH repetition type A, or PUSCH repetition type B, according to Clause 6.1.2.1. | |
| | - For any two consecutive PUCCH transmissions of PUCCH repetition, and when a PUCCH resource used for repetitions of a PUCCH transmission by a UE includes first and second spatial relations or first and second sets of power control parameters, as described in [10, TS 38.321] and in clause 7.2.1 of [6, TS 38.213], different spatial relations or different power control parameters are used for the two PUCCH transmissions of PUCCH repetition, according to Clause 9.2.6 of [6, TS 38.213]. | |
| | - Uplink timing adjustment in response to a timing advance command according to clause 4.2 of [6, TS 38.213]. | |
| | - Frequency hopping. | |
| | - For reduced capability half-duplex UEs, | |
| | | - a dropping or cancellation of a PUSCH or PUCCH transmission according to clause 17.2 of [6, TS 38.213] or |
| | | - an overlapping of the gap between two consecutive PUSCH or two consecutive PUCCH transmissions and any symbol of downlink reception or downlink monitoring |

**Table 8**

| |
|---|
| 6.1.7 UE procedure for determining time domain windows for bundling DM-RS |
| ... |
| The UE shall maintain power consistency and phase continuity within an actual TDW, across PUSCH transmissions of PUSCH repetition Type A scheduled by DCI format 0_1 or 0_2, or PUSCH repetition Type A with a configured grant, or PUSCH repetition type B or TB processing over multiple slots, or across PUCCH transmissions of PUCCH repetition, in case the actual TDW is created in response to frequency hopping, or in response to the use of a different SRS resource set association for the two PUSCH transmissions of PUSCH repetition type A, or PUSCH repetition type B, or in response to the use of different spatial relations or different power control parameters for the two PUCCH transmissions of PUCCH repetition, or in response to any event not triggered by DCI or MAC-CE. The UE maintains power consistency and phase continuity within an actual TDW, across PUSCH transmissions of PUSCH repetition Type A scheduled by DCI format 0_1 or 0_2, or PUSCH repetition Type A with a configured grant, or PUSCH repetition type B or TB processing over multiple slots, or across PUCCH transmissions of PUCCH repetition, in case the actual TDW is created in response to an event triggered by DCI other than frequency hopping or the use of a different SRS resource set association for the two PUSCH transmissions of PUSCH repetition type A, or PUSCH repetition type B, or the use of different spatial relations or different power control parameters for the two PUCCH transmissions of PUCCH repetition, or in response to an event triggered by MAC-CE, subject to UE capability, of *dmrs-BundlingRestart* [13, TS 38.306] and when *pusch-WindowRestart* or *pucch-WindowRestart* is enabled. |

The parameters in italics in the above tables may be provided by higher-layer (e.g. RRC) signaling.

The following tables provide field descriptions for information element (IE) *DMRS-BundlingPUCCH-Config* and IE *DMRS-BundlingPUSCH-Config* used to enable DRMS bundling for the PUCCH, as specified in 3GPP TS 38.331 Rel-17. IE *DMRS-BundlingPUCCH-Config* and IE *DMRS-BundlingPUSCH-Config* are RRC configurations provided to the UE by the BS.

**Table 9**

| ***DMRS-BundlingPUCCH-Config* field descriptions** |
|---|
| ***pucch-DMRS-Bundling*** |
| Indicates whether DMRS bundling and time domain window for PUCCH are jointly enabled. |
| ***pucch-FrequencyHoppingInterval*** |
| Configures the number of consecutive slots for the UE to perform inter-slot frequency hopping with inter-slot bundling for PUCCH. When both inter-frequency hopping and DMRS bundling are enabled for PUCCH repetitions, the UE is expected to be configured with at least one *pucch-FrequencyHoppingInterval-r17* and *pucch-TimeDomainWindowLength-r17.* When DMRS bundling for PUCCH is enabled by *pucch-DMRS-Bundling-r17,* PUCCH frequency hopping interval is only determined by the configuration of PUCCH hopping interval if PUCCH hopping interval is configured. If the field is absent, the number of consecutive slots for the UE to perform inter-slot PUCCH frequency hopping is indicated by *pucch-TimeDomainWindowLength-r17.* |
| ***pucch-TimeDomain WindowLength*** |
| Configures the length of a nominal time domain window in slots for DMRS bundling for PUCCH. The value shall not exceed the maximum duration for DMRS bundling for PUCCH as specified in TS 38.306 [26]. If this field is absent, the UE shall apply the default value that is the minimum value in the unit of consecutive slots of the time duration for the transmission of all PUCCH repetitions and the maximum duration for DMRS bundling for PUCCH as specified in TS 38.306 [26]. |
| ***pucch-WindowRestart*** |
| Indicates whether UE bundles PUCCH DMRS remaining in a nominal time domain window after event(s) triggered by DCI or MAC CE that violate power consistency and phase continuity requirements is enabled (see TS 38.214 [19], clause 6.1.7). |
| NOTE:Events, which are triggered by DCI or MAC CE, but do not require UE capability to resume maintaining power consistency and/or phase continuity as specified in clause 6.1.7 of TS 38.214 [19], are excluded. |

**Table 10**

| ***DMRS-BundlingPUSCH-Config* field descriptions** |
|---|
| ***pusch-DMRS-Bundling*** |
| Indicates whether DMRS bundling and time domain window for PUSCH are jointly enabled. |
| ***pusch-FrequencyHoppingInterval*** |
| Configures the number of consecutive slots for the UE to perform inter-slot frequency hopping with inter-slot bundling for PUSCH. When both inter-frequency hopping and DMRS bundling are enabled for PUSCH repetitions, the UE is expected to be configured with at least one *pusch-FrequencyHoppingInterval-r17* and *pusch-TimeDomainWindowLength-r17.* This parameter is shared for both DG-PUSCH and CG-PUSCH. When DMRS bundling for PUSCH is enabled by *pusch-DMRS-Bundling-r17,* PUSCH frequency hopping interval is only determined by the configuration of PUSCH hopping interval if PUSCH hopping interval is configured. If the field is absent, the number of consecutive slots for the UE to perform inter-slot PUSCH frequency hopping is indicated by *pusch-TimeDomainWindowLength-r17.* |
| Note: For unpaired spectrum, the UE is not expected to be configured the value of s6, s8, s12, s14 and s16. |
| ***pusch-TimeDomain WindowLength*** |
| Configures the length of a nominal time domain window in number of consecutive slots for DMRS bundling for PUSCH. The value shall not exceed the maximum duration for DMRS bundling for PUSCH as specified in TS 38.306 [26]. For PUSCH repetition type A/B, if this field is absent, the UE shall apply the default value that is the minimum value in the unit of consecutive slots of the time duration for the transmission of all PUSCH repetitions and the maximum duration for DMRS bundling for PUSCH as specified in TS 38.306 [26]. For TBoMS, if this field is absent, the UE shall apply the default value that is the minimum value in the unit of consecutive slots of the duration of TBoMS transmission (including repetition of TBoMS) and the maximum duration for DMRS bundling for PUSCH as specified in TS 38.306 [26]. |
| ***pusch-WindowRestart*** |
| Indicates whether UE bundles PUSCH DMRS remaining in a nominal time domain window after event(s) triggered by DCI or MAC CE that violate power consistency and phase continuity requirements is enabled (see TS 38.214 [19], clause 6.1.7). |
| NOTE:Events, which are triggered by DCI or MAC CE, but do not require UE |
| capability to resume maintaining power consistency and/or phase continuity as specified in clause 6.1.7 of TS 38.214 [19], are excluded. |

In the above table, TBoMS is a technique introduced to solve the problem that when the size of a TB is determined as the number of scheduled REs in one slot in which a PUSCH is transmitted, the size of a TB applied to the PUSCH is so insufficient as to process the TB properly, wherein one PUSCH is transmitted or processed over a plurality of slots. The number of slots belonging to TBoMS is configured by RRC signaling, numberOfSlots-TBoMS and used to calculate the size of a TB used in TBoMS. According to TBoMS, the size of a TB may be derived based on the number of REs in a PUSCH scheduled in a plurality of slots.

According to the above tables, a time period available for DMRS bundling is determined based on a parameter such as a maximum TDW length and an event such as a TA command from the BS (e.g., see 3GPP TS 38.214 Rel-17 and 3GPP TS 38.331 Rel-17). However, this method may not be suitable for an NTN environment where the position between a BS and a UE changes continuously. Some implementations of the disclosure for determining a TDW for DMRS bundling in consideration of the characteristics of the NTN environment are described below.

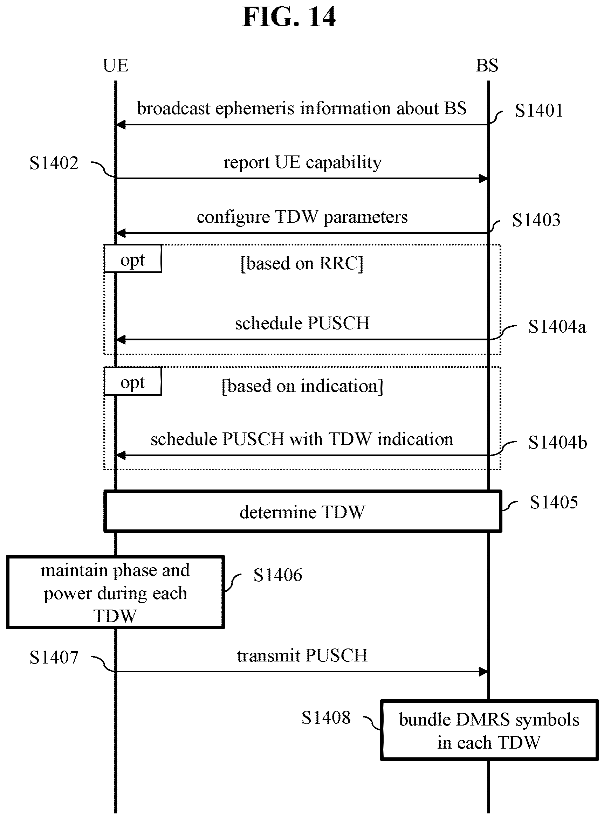

FIG. 14 illustrates a UL channel transmission/reception flow according to some implementations of the disclosure. While the PUSCH is taken as an example of a UL channel in FIG. 14, the flow of FIG. 14 may also be applied to other UL channels. Furthermore, some implementations of the disclosure may be applied to a DL channel as well as a UL channel.

Referring to FIG. 14, a BS may broadcast ephemeris information about the BS through a cell managed by the BS (S1401). The BS may receive location information and/or a capability report from a UE during or after an initial access process (S1402). The BS may configure RRC parameter(s) related to TDW determination based on or in response to the report from the UE (S1403). When the BS schedules a PUSCH transmission for a UL transmission for the UE (S1404a or S1404b), the BS may include an additional indication for the TDW determination in a scheduling message (e.g., in a DCI format that schedules the PUSCH or an RRC configuration, IE ConfiguredGrantConfig or PUSCH-Config) according to some implementations of the disclosure. The UE and the BS may determine the number of TDWs and their respective lengths according to some implementations of the disclosure, taking into account the TDW-related RRC parameter(s) and/or an L1 indication (e.g., an indication via DCI) (S1405). In other words, when TDW information is configured via RRC signaling, the BS may transmit the scheduling message without any TDW information to the UE (S1404a), and the UE may determine the TDWs based on the RRC-configured information (S1405). When the BS uses a method of transmitting TDW information along with scheduling information to the UE in order to dynamically change TDW information (S1404b), the UE may determine the TDWs based on the scheduling message from the BS (S1405). The UE may perform the PUSCH transmission (S1407), while maintaining a TA and UL transmission power during one determined TDW to avoid power inconsistency and phase discontinuity (S1406), and the BS may attempt to receive the PUSCH through DMRS bundling in each TDW (S1408).

In some implementations of the disclosure, pre-compensating may refer to an operation that causes power inconsistency and phase discontinuity, such as a UE operation of autonomously compensating a TA value based on the location of a satellite and/or a BS, and/or open-loop UL power control, and/or a UE operation of adjusting UL transmission power based on the location or signal strength of the satellite and/or the BS, as described above.

In some implementations of the disclosure, the UE may also compensate for Doppler effects that may be caused by movement of the satellite (or NTN platform), such as by UL power control and TA adjustment to address issues caused by movement of the satellite (or NTN platform) during a TDW. This may also be one of the pre-compensation operations.

### <Implementation 1> TDW determination based on BS/UE indication before transmission

According to implementation 1, the UE may report its pre-compensation time to the BS in advance. Additionally or alternatively, the BS may indicate to the UE a time when the UE is allowed to pre-compensate in advance according to implementation 1. For this purpose, at least one of the following methods may be considered.
* Method 1: The BS may configure a separate pre-compensation pattern for the UE. The pattern indicates a time/period (or the starting time of the period) allowing pre-compensation for the UE. To indicate the time/period (or the starting time of the period), the pattern may be indicated to the UE in the form of a bitmap where each bit may represent one time unit (TU), for example, a UL slot/symbol or a PUSCH. The UE may assume that pre-compensation is allowed at the beginning of a TU for which the bit is indicated as 1, at the end of the TU, or at a slot/slot boundary between TUs where the mapped bit changes from 0 to 1 or 1 to 0. The first bit of the pattern may mean the first TU of a PUSCH scheduled by the BS or the first TU of a system frame number (SFN), and the bit size of the pattern (e.g., the number of bits to be included in the pattern) may mean the period of the pattern. That is, an N-bit pattern may represent a pattern of times/periods (or the starting times of the periods) allowing pre-compensation, which is repeated every N TUs from the first TU of the scheduling or the first TU of the SFN. The pattern may be pre-configured or pre-indicated to the BS by the UE through higher-layer signaling (e.g., RRC signaling) or L1 signaling (e.g., group-common DCI), or may be pre-indicated or pre-configured by the BS based on a capability report transmitted by the UE. The capability report may be a time/period associated with a maximum TDW length that the UE may maintain in the NTN environment. In the case of a stationary BS (e.g., GEO), the capability report may be based on the maximum TDW length that the UE may maintain. That is, in the case of a stationary BS, a capability reported by the capability report may be associated with an existing maximum TDW length.
* Method 2: The BS may configure a periodic pre-compensation occasion for the UE. When pre-compensation is required, the UE may notify the BS whether pre-compensation is performed, and perform pre-compensation in one or more of preconfigured pre-compensation occasions. Whether pre-compensation is performed may be indicated in the form of a bitmap. Each bit of the bitmap may represent one pre-compensation occasion, and the UE may indicate to the BS whether pre-compensation is performed by setting bits associated with pre-compensation occasions in which the UE is to perform pre-compensation to 1. For example, through a bitmap of N bits, the UE may indicate whether to perform pre-compensation in N pre-compensation occasions from a reporting time. In some implementations, the pre-compensation occasions may have a period and period offset in slots, from the starting time of an SFN.

The UE and the BS may determine a TDW as follows, taking into account a pre-compensation time/period (or the starting time of the period) of the UE determined based on Method 1 or Method 2.

### ** Method 1-1

*** 1. As specified in clause 6.1.7 of 3GPP TS 38.214, a nominal TDW may be determined according to RRC parameter(s) configured for the UE, the repetition type of a scheduled PUSCH, the number of repetitions, and the length of TB processing over multiple slots. The thus-determined nominal TDW may be divided into a plurality of TDWs at each pre-compensation allowing time/period or at each actual pre-compensation performed time/period at the UE, in consideration of a pattern (e.g., a pattern as described in Method 1 or a periodic pre-compensation occasion as described in Method 2). For example, when the nominal TDW overlaps with the pre-compensation allowing time/period or the actual pre-compensation performed time/period (at the UE), the nominal TDW may be divided into two nominal TDWs with respect to the time/period.
*** 2. As specified in clause 6.1.7 of 3GPP TS 38.214, a final actual TDW may be determined based on a defined event that causes power consistency and phase continuity not to be maintained and an RRC parameter, *PUSCH- Window-Restart.* The RRC parameter *PUSCH-Window-Restart* indicates whether the UE is to bundle the remaining PUSCH DMRSs in the nominal TDW after event(s) triggered by DCI or a MAC control element (CE) that violates power consistency and phase continuity requirements is enabled.

### ** Method 1-2

*** 1. As specified in clause 6.1.7 of 3GPP TS 38.214, a nominal TDW may be determined according to RRC parameter(s) configured for the UE, the repetition type of a scheduled PUSCH, the number of repetitions, and the length of TB processing over multiple slots.
*** 2. As specified in clause 6.1.7 of 3GPP TS 38.214, a final actual TDW may be determined based on a defined event that causes power consistency and phase continuity not to be maintained and an RRC parameter, *PUSCH- Window-Restart.* In consideration of a pattern (e.g., a pattern as described in Method 1 or a periodic pre-compensation time as described in Method 2), the UE may consider each pre-compensation allowing time/period or each actual pre-compensation performed time/period of the UE to be the defined event that causes power consistency and phase continuity not to be maintained. Accordingly, when the nominal TDW overlaps with the pre-compensation allowing time/period or the actual pre-compensation performed time/period of the UE, the UE may assume that a previous actual TDW ends and the next actual TDW may begin, based on the time/period.
   * TA drift caused by movement of the satellite (or NTN platform) may be more serious for a particular UE. For example, when the UE is located at a subsatellite point in a path of the satellite (or NTN platform) (i.e., in a satellite orbit), the UE may experience large TA drift according to the movement of the satellite. The BS may receive a report of and/or indicate the possibility of performing pre-compensation only from and/or to UEs that may experience this or similar situation.
      ** For example, when pre-compensation is required, the UE may the use of a pattern (e.g., a pattern as described in Method 1 or a periodic pre-compensation timing as described in Method 2) to the BS in advance. For example, UCI such as a scheduling request (SR) may be used. In this case, the pattern may be applied only during a limited time period based on a time/period and information indicated by the UE.
      ** In another example, the BS may instruct the UE to use a pattern, when it expects pre-compensation to be required. A field in scheduling DCI may indicate whether the pattern is to be used. In this case, the pattern may be applied only to a PUSCH resource scheduled by the scheduling DCI.
      ** In other words, when the BS expects that the possibility of pre-compensation at the UE is high, the BS may determine a TDW, taking into account a given pattern. When pre-compensation is required, the UE may perform pre-compensation at a corresponding position in consideration of the pattern and start a new TDW. In this way, the UE may perform pre-compensation at a determined time/period, when needed, and the BS may anticipate this, arbitrarily determine a TDW without transmitting an additional message, and perform PUSCH DMRS bundling in each TDW.

In implementation 1, the pre-compensation pattern or periodic pre-compensation occasion configured for the UE by the BS may be provided through a UE-specific configuration given separately to each UE to take into account the situation of the UE, or through a cell-specific configuration or predefined value to reduce signaling overhead. Particularly, in the case where the pre-compensation pattern or periodic pre-compensation occasion is provided through a cell-specific configuration or a predefined value, a plurality of patterns and periodic occasions may be given for each NTN type (e.g., GEO, MEO, LEO, and so on) or satellite (or NTN platform) ephemeris information, and the UE may automatically select and use one of them without any signaling according to the NTN type or satellite (or NTN platform) of services received by the UE.

As described above, in some implementations, the pre-compensation may be performed incrementally during some time period to facilitate UE implementation. In this case, the pre-compensation time may refer to the starting time of a period during which the pre-compensation is performed.

As described above, in some implementations, the pre-compensation time/period may be any time period to facilitate UE implementation. In this case, it may be assumed that an actual TDW does not begin immediately after some time point at which pre-compensation is allowed. For example, when the UE determines the end of one actual TDW and is about to determine the start of the next TDW due to occurrence of a defined event that causes power consistency and phase continuity not to be maintained, the start of the next TDW may be away from the actual TDW by at least a specific time interval. That is, a minimum time interval Tₚ may be guaranteed between the end of a TDW triggered by pre-compensation and the start of a new TDW. The time interval Tₚ may be a predefined value, a value included in the capability report of the UE, a value indicated or configured by L1 signaling (e.g., DCI) and/or higher-layer signaling (e.g., MAC signaling, or RRC signaling) of the BS, or a value derived from these values.

### <Implementation 2> TDW determination based on gNB/UE indication after transmission

The UE may report a pre-compensation time/period that has occurred during a PUSCH transmission of the UE after the PUSCH transmission. The BS may re-determine a TDW based on the pre-compensation time/period reported by the UE after the PUSCH transmission, combine PUSCH DMRSs based on the re-determined TDW, and attempt to decode the PUSCH again. For example, the BS may configure a periodic pre-compensation occasion for the UE. The UE may perform pre-compensation in one or more preset pre-compensation occasions and then notify the BS whether pre-compensation has been performed. The indication may be in the form of a bitmap. Each bit of the bitmap may represent one pre-compensation occasion, and the UE may indicate to the BS that it has performed pre-compensation by setting a bit associated with a pre-compensation occasion in which it has performed pre-compensation to 1. In other words, the UE may indicate through an N-bit bitmap whether it has performed pre-compensation in N pre-compensation occasions before a reporting time.

In implementation 2, the UE may indicate whether it has performed corresponding pre-compensation through a periodic PUCCH transmission. For example, the UE may perform a corresponding PUCCH transmission only when pre-compensation has been actually performed.

The UE may determine a TDW as follows, taking into account a pre-compensation time/period of the UE. The BS may re-determine a TDW as follows, taking into account a reported pre-compensation performed time/period of the UE.

### * Method 1-1

** 1. As specified in clause 6.1.7 of 3GPP TS 38.214, a nominal TDW may be determined according to RRC parameter(s) configured for the UE, the repetition type of a scheduled PUSCH, the number of repetitions, and the length of TB processing over multiple slots. The thus-determined nominal TDW may be divided into a plurality of TDWs at each pre-compensation allowing time/period or at each actual pre-compensation performed time/period at the UE, in consideration of a pattern (e.g., a pattern as described in Method 1 or a periodic pre-compensation occasion as described in Method 2). For example, when the nominal TDW overlaps with the pre-compensation allowing time/period or the actual pre-compensation performed time/period (at the UE), the nominal TDW may be divided into two nominal TDWs with respect to the time/period.
*** 2. As specified in clause 6.1.7 of 3GPP TS 38.214, a final actual TDW may be determined based on a defined event that causes power consistency and phase continuity not to be maintained and an RRC parameter, *PUSCH- Window-Restart.*

### * Method 1-2

** 1. As specified in clause 6.1.7 of 3GPP TS 38.214, a nominal TDW may be determined according to RRC parameter(s) configured for the UE, the repetition type of a scheduled PUSCH, the number of repetitions, and the length of TB processing over multiple slots.
   *** 2. As specified in clause 6.1.7 of 3GPP TS 38.214, a final actual TDW may be determined based on a defined event that causes power consistency and phase continuity not to be maintained and an RRC parameter, *PUSCH- Window-Restart.* In consideration of a pattern (e.g., a pattern as described in Method 1 or a periodic pre-compensation time as described in Method 2), the UE may consider each pre-compensation allowing time/period or each actual pre-compensation performed time/period of the UE to be the defined event that causes power consistency and phase continuity not to be maintained. Accordingly, when the nominal TDW overlaps with the pre-compensation allowing time/period or the actual pre-compensation performed time/period (at the UE), the UE may divide the nominal TDW into two nominal TDWs with respect to the time/period.

### <Implementation 3> DMRS bundling termination based on phase inconsistency prediction

It may be considered that based on prediction of a change in the location of the UE or the BS, the BS performs DMRS bundling termination or the BS indicates or configures DMRS bundling termination through L1 signaling (e.g., DCI) or higher-layer signaling (e.g., MAC signaling or RRC signaling). For example, at least one of the following methods may be considered.
* Method 1: The BS may configure a specific geopolitical position for the UE and assume that the UE and the BS do not perform DMRS bundling in a configured corresponding period.
   ** This is useful when the transmission and reception quality between the UE and the BS becomes poor at a specific position or a specific ephemeris, or when there is interference with other satellites.
   ** The geopolitical position may be an angle between the BS and the UE, a relative position between the BS and the UE, the position of the BS on the earth surface, the position of the UE, or a relative position between the BS and the UE when the BS or the UE is at a specific position on the earth surface.
      *** To indicate a specific position on the earth surface, the following method may be used.
         **** A specific longitude and latitude on the earth surface and a radius from that point may be set.
         **** The longitudes and latitudes of three points on the earth surface may be indicated. The inside of a triangle formed by the three points may be the indicated position.
      *** To indicate a relative position, the following method may be used.
         **** A reference node (e.g., UE or BS) may be configured.
         **** A distance r from the reference node (e.g., UE or BS) may be configured.
         **** A tolerance d_t may be configured to consider a specific range as the position. For example, any distance within the range [r-d_t, r+d_t] may be considered to be the position.
         **** An elevation angle, an azimuth angle, or their ranges between the reference node and another node may be configured.
   ** At the above geopolitical position, the UE and the BS may perform PUSCH transmission and reception, taking into account the following.
      *** The UE and the BS may perform bundling only in the corresponding part, or
      *** the UE may drop a transmission including the part and have a mute period where no transmission is performed, or
      *** the UE may discontinue repeated transmissions for PUSCH repetition initiated in the part without separate signaling, or
      *** the UE may perform the PUSCH transmission by changing the number of DMRS symbols, a modulation and coding scheme (MCS), the number of repetitions to be used in the transmission, and so on in the part to a predetermined value or a value indicated or configured by the BS, other than a value indicated during scheduling.

### <Implementation 4> Adjustable maximum TDW size

In the conventional system, the maximum TDW length of a UE is known by the capabilities of the UE and semi-statically determined through a configuration based on higher-layer signaling from the BS. However, in the NTN environment, a maximum duration during which the UE may actually maintain UL transmission power and a TA is highly related to a relative position between the BS and the UE and a variation of the relative position as well as the transmission and reception capabilities of the UE. For example, when the UE and the BS move in opposite directions, the distance between the UE and the BS may increase rapidly, and in this case, the UL transmission power and the TA may change at shorter intervals.

Therefore, the maximum duration during which power consistency and phase continuity may be maintained may depend on a satellite orbit and the position of the UE, and thus an appropriate TDW size may vary from moment to moment. Accordingly, there is a need to dynamically determine the TDW size. For example, the BS may pre-configure a set of candidate (maximum) TDW sizes for the UE, and at each PUSCH scheduling, DCI carrying a scheduling message may instruct the UE, through a DCI field, to use one of the pre-configured candidate TDW sizes for a PUSCH transmission scheduled by the DCI.

* In implementation 4, the candidate (maximum) TDW sizes may be values that are configured in addition to the conventional *PUSCH-TimeDomainWindowLength.* In other words, the candidate (maximum) TDW sizes may be configured even when *PUSCH-TimeDomainWindowLength* is configured. When the candidate (maximum) TDW sizes are values that are configured in addition to the conventional *PUSCH-TimeDomainWindowLength,* the DCI field may indicate whether the conventional *PUSCH-TimeDomainWindowLength* is to be used (i.e., the candidate (maximum) TDW sizes are not to be used) or the configured candidate (maximum) TDW sizes are to be used. When the conventional *PUSCH-TimeDomainWindowLength* is not configured, a value of the DCI field which indicates the use of the conventional *PUSCH-TimeDomainWindowLength* may simply indicate that the candidate (maximum) TDW sizes are not applied.
* In Implementation 4, the candidate (maximum) TDW sizes may be values that are configured to substitute for the conventional *PUSCH-TimeDomainWindowLength.* When the candidate (max) TDW sizes are values that are configured to substitute for the conventional *PUSCH-TimeDomainWindowLength,* the DCI field may indicate whether the candidate (max) TDW sizes are to be used or not.

Implementation 4 may be used to allow the UE to determine a (maximum) TDW size to be used for TDW determination in a corresponding transmission. In this case, the UE may use a dynamically determined (maximum) TDW size using implementation 4 for nominal TDW determination, in the same manner as the application of the conventional *PUSCH-TimeDomainWindowLength.* For example, the following sequence of operations may be performed.
> 1. The UE may be semi-statically configured with a TDW length through the parameter *PUSCH-TimeDomainWindowLength* by the BS.
> 2. A TDW length may be dynamically indicated to the UE through a DCI field of dynamically scheduled DCI.
> 3. When a TDW length is dynamically indicated to the UE, the UE uses the TDW length.
> 4. When a TDW length is not dynamically indicated to the UE, and the parameter *PUSCH- TimeDomainWindowLength* is configured, the UE uses the TDW length configured by the parameter *PUSCH- TimeDomainWindowLength.*
> 5. When a TDW length is not dynamically indicated to the UE, and the parameter *PUSCH-TimeDomainWindowLength* is not configured or is instructed not to be used, the UE applies a default value, which is a minimum value in the unit of consecutive slots between a duration for all transmissions of PUSCH repetition and a maximum duration for DMRS bundling for the PUSCH, as specified in 3GPP TS 38.306. The duration for the transmissions of PUSCH repetition may be determined by scheduling information, for example, the number of PUSCH repeated transmissions, a TDRA, and so on. The maximum duration for DMRS bundling for the PUSCH may be determined by UE capabilities. In the case of TB processing over multiple slots for the PUSCH (TBoMS), the UE applies a default value, which is a minimum value in the unit of consecutive slots between the duration of TBoMS (including repetitions of TBoMS) and the maximum duration for DMRS bundling for the PUSCH, as specified in 3GPP TS 38.306. The duration of TBoMS (including repetitions of TBoMS) may be determined by the number of configured TBoMS slots, the number of repeated transmissions of the scheduled PUSCH, and the TDRA. For example, since the UE transmits one PUSCH during a period as long as the number of TBoMS slots, the duration of TBoMS may be determined as the product of the number of TBoMS slots and the number of repeated transmissions.

In implementation 4, to enable the BS to configure appropriate candidate (maximum) TDW sizes, the UE may report an appropriate TDW size based on a change in the relative position between the BS and the UE or a change in the rate of the change, by a capability report.

In implementation 4, when the BS configures appropriate candidate (maximum) TDW sizes, their respective values may not exceed the maximum duration for DMRS bundling for the PUSCH, reported by the UE, as specified in 3GPP TS 38.306 (e.g., see RRC parameter *maxDurationDMRS-Bundling* in 3GPP TS 38.331 Rel-17).

### <Implementation 5> UE capability on maximum TDW size per NTN platform type

In the conventional system, a maximum TDW length of the UE may be configured for the UE based on the capabilities of the UE by the BS. However, as described before, a duration during which the UE may maintain a TA and transmission power may vary depending on the relative position and speed between the UE and the satellite. Therefore, based on a single existing capability, it is difficult for the BS to determine an appropriate maximum TDW length for the UE. Accordingly, in some implementations of the disclosure, the maximum TDW length may be determined, taking into account a plurality of UE capabilities in consideration of the movement of the satellite and its relative position to the UE, or a UE capability in consideration of a particular movement of the satellite. For example, the following may be considered.
* The UE may report a maximum TDW length that may maintain phase continuity and power consistency for each satellite orbit type, for example, each NTN platform type such as GEO, LEO, and MEO, as a UE capability. Since the BS knows its NTN platform, it may configure a maximum TDW length suitable for the NTN platform for the UE.
* The UE may report, as a UE capability, a maximum TDW length that may maintain phase continuity and power consistency, when the satellite moves away from the UE at a specific speed. In some implementations, the UE may report, as a UE capability, multiple TDWs for various speed ranges of the satellite. Since the BS knows its movement speed, it may configure a maximum TDW length suitable for the movement speed for the UE.

Although the above-described implementations of the disclosure (e.g., implementation 1 to implementation 5) may be applied independently, they may also be applied in a combination (or merge) of some implementations. For example, Implementation 4 may be applied together with one or more of Implementation 1, Implementation 2, Implementation 3, and Implementation 5. It may be regulated that the BS indicates to the UE whether the above-described implementations are applied (or information about rules of the implementations) through a predefined signal (e.g., a physical layer signal or a higher-layer signal). The higher layer may include one or more of functional layers such as MAC, RLC, PDCP, RRC, and SDAP.

According to some implementations of the disclosure, a TDW suitable for an NTN may be determined. According to some implementations of the disclosure, DMRS bundling may be performed suitably for an NTN.

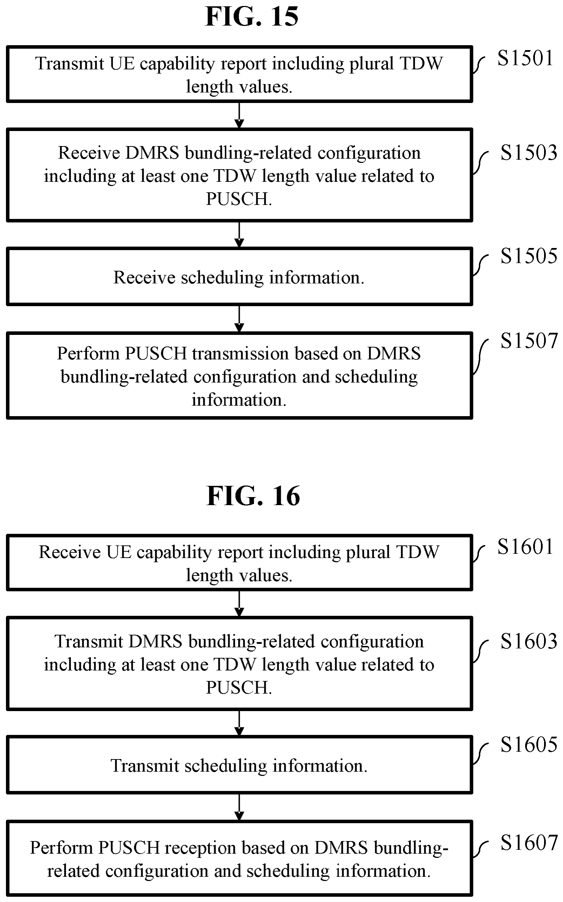

FIG. 15 illustrates a UL signal transmission flow of a UE according to some implementations of the disclosure.

The UE may perform operations according to some implementations of the disclosure in relation to a UL signal transmission. The UE may include at least one transceiver, at least one processor, and at least one computer memory operably coupled to the at least one processor and storing instructions which, when executed, cause the at least one processor to perform operations according to some implementations of the disclosure. A processing device for a UE may include at least one processor, and at least one computer memory operably coupled to the at least one processor and storing instructions which, when executed, cause the at least one processor to perform operations according to some implementations of the disclosure. A computer-readable (non-transitory) storage medium may store instructions which, when executed by at least one processor, cause the at least one processor to perform operations according to some implementations of the disclosure. A computer program or a computer program product may include instructions which are recorded in at least one computer-readable (non-transitory) storage medium, and when executed, cause (at least one processor) to perform operations according to some implementations of the disclosure.

Referring to FIG. 15, in the method performed by the UE, or the UE, the processing device, the computer-readable (non-transitory) storage medium, and/or the computer program product, the operations may include transmitting a UE capability report including a maximum TDW length value for each of a plurality of platform types (S1501), receiving a configuration including at least one TDW length value related to a PUSCH (S1503), receiving scheduling information related to a PUSCH transmission (S1505), and determining a TDW for DMRS bundling based on the configuration and the scheduling information and performing the PUSCH transmission based on the TDW (S1507). The PUSCH transmission may include a DMRS related to the PUSCH transmission, and the UE may perform DMRS bundling maintaining power consistency and phase continuity within the TDW.

In some implementations, the scheduling information may include information regarding one of the at least one TDW length value.

In some implementations, the scheduling information is included in DCI carried by a PDCCH.

In some implementations, each of the plurality of platform types may be determined based on a satellite orbit.

In some implementations, the method or the operations may include receiving ephemeris information regarding a BS, and terminating the DMRS bundling, while a position of the UE relative to the BS or a position of the BS corresponds to a predetermined position range based on the ephemeris information.

FIG. 16 illustrates a UL signal reception flow of a BS according to some implementations of the disclosure.

The BS may perform operations according to some implementations of the disclosure in relation to a UL signal reception. The BS may include at least one transceiver, at least one processor, and at least one computer memory operably coupled to the at least one processor and storing instructions which, when executed, cause the at least one processor to perform operations according to some implementations of the disclosure. A processing device for a BS may include at least one processor, and at least one computer memory operably coupled to the at least one processor and storing instructions which, when executed, cause the at least one processor to perform operations according to some implementations of the disclosure. A computer-readable (non-transitory) storage medium may store instructions which, when executed by at least one processor, cause the at least one processor to perform operations according to some implementations of the disclosure. A computer program or a computer program product may include instructions which are recorded in at least one computer-readable (non-transitory) storage medium, and when executed, cause (at least one processor) to perform operations according to some implementations of the disclosure.

Referring to FIG. 16, in the method performed by the BS, or the BS, the processing device, the computer-readable (non-transitory) storage medium, and/or the computer program product, the operations may include receiving a UE capability report including a maximum TDW length value for each of a plurality of platform types from the UE (S1601), transmitting a configuration including at least one TDW length value related to a PUSCH (S1603), transmitting scheduling information related to a PUSCH transmission (S1605), and determining a TDW for DMRS bundling based on the configuration and the scheduling information and performing the PUSCH reception based on the TDW (S1607). The PUSCH transmission may include a DMRS related to the PUSCH reception, and the BS may perform the PUSCH reception, assuming that the UE performs DMRS bundling maintaining power consistency and phase continuity within the TDW.

In some implementations, the scheduling information may include information regarding one of the at least one TDW length value.

In some implementations, the scheduling information may be included in DCI carried by a PDCCH.

In some implementations, each of the plurality of platform types may be determined based on a satellite orbit.

In some implementations, the method or the operations may include transmitting ephemeris information regarding the BS, and performing the PUSCH reception, assuming that the DMRS bundling is terminated, while a position of the UE relative to the BS or a position of the BS corresponds to a predetermined position range based on the ephemeris information.

The examples of the disclosure as described above have been presented to enable any person of ordinary skill in the art to implement and practice the disclosure. Although the disclosure has been described with reference to the examples, those skilled in the art may make various modifications and variations in the example of the disclosure. Thus, the disclosure is not intended to be limited to the examples set for the herein, but is to be accorded the broadest scope consistent with the principles and features disclosed herein.

The implementations of the disclosure may be used in a BS, a UE, or other equipment in a wireless communication system.

## Claims

1. A method of transmitting an uplink channel at a user equipment (UE) in a wireless communication system, the method comprising:
transmitting a UE capability report including a maximum time domain window (TDW) length value for each of a plurality of platform types;
receiving a configuration including at least one TDW length value related to a physical uplink shared channel (PUSCH);
receiving scheduling information related to a PUSCH transmission;
determining a TDW for demodulation reference signal (DMRS) bundling based on the configuration and the scheduling information; and
performing the PUSCH transmission based on the TDW,
wherein the PUSCH transmission includes a DMRS related to the PUSCH transmission, and
wherein the UE performs DMRS bundling maintaining power consistency and phase continuity within the TDW.

2. The method of claim 1, wherein the scheduling information includes information regarding one of the at least one TDW length value.

3. The method of claim 2, wherein the scheduling information is included in downlink control information (DCI) carried by a physical downlink control channel (PDCCH).

4. The method of claim 1, wherein each of the plurality of platform types is determined based on a satellite orbit.

5. The method of claim 1, comprising:
receiving ephemeris information regarding a base station (BS); and
terminating the DMRS bundling, while a position of the UE relative to the BS or a position of the BS corresponds to a predetermined position range based on the ephemeris information.

6. A user equipment (UE) for transmitting an uplink channel in a wireless communication system, the UE comprising:
at least one transceiver;
at least one processor; and
at least one computer memory operably coupled to the at least one processor and storing instructions which, when executed, cause the at least one processor to perform operations,
wherein the operations include:
transmitting a UE capability report including a maximum time domain window (TDW) length value for each of a plurality of platform types;
receiving a configuration including at least one TDW length value related to a physical uplink shared channel (PUSCH);
receiving scheduling information related to a PUSCH transmission;
determining a TDW for demodulation reference signal (DMRS) bundling based on the configuration and the scheduling information; and
performing the PUSCH transmission based on the TDW,
wherein the PUSCH transmission includes a DMRS related to the PUSCH transmission, and
wherein the operations include performing DMRS bundling maintaining power consistency and phase continuity within the TDW.

7. A processing device in a wireless communication system, comprising:
at least one processor; and
at least one computer memory operably coupled to the at least one processor and storing instructions which, when executed, cause the at least one processor to perform operations,
wherein the operations include:
transmitting a UE capability report including a maximum time domain window (TDW) length value for each of a plurality of platform types;
receiving a configuration including at least one TDW length value related to a physical uplink shared channel (PUSCH);
receiving scheduling information related to a PUSCH transmission;
determining a TDW for demodulation reference signal (DMRS) bundling based on the configuration and the scheduling information; and
performing the PUSCH transmission based on the TDW,
wherein the PUSCH transmission includes a DMRS related to the PUSCH transmission, and
wherein the operations include performing DMRS bundling maintaining power consistency and phase continuity within the TDW.

8. A computer-readable storage medium storing at least one program code including instructions which, when executed, cause at least one processor to perform operations,
wherein the operations include:
transmitting a user equipment (UE) capability report including a maximum time domain window (TDW) length value for each of a plurality of platform types;
receiving a configuration including at least one TDW length value related to a physical uplink shared channel (PUSCH);
receiving scheduling information related to a PUSCH transmission;
determining a TDW for demodulation reference signal (DMRS) bundling based on the configuration and the scheduling information; and
performing the PUSCH transmission based on the TDW,
wherein the PUSCH transmission includes a DMRS related to the PUSCH transmission, and
wherein the operations include performing DMRS bundling maintaining power consistency and phase continuity within the TDW.

9. A method of receiving an uplink channel from a user equipment (UE) at a base station (BS) in a wireless communication system, the method comprising:
receiving a UE capability report including a maximum time domain window (TDW) length value for each of a plurality of platform types from the UE;
transmitting a configuration including at least one TDW length value related to a physical uplink shared channel (PUSCH);
transmitting scheduling information related to a PUSCH transmission;
determining a TDW for demodulation reference signal (DMRS) bundling based on the configuration and the scheduling information; and
performing the PUSCH reception based on the TDW,
wherein the PUSCH transmission includes a DMRS related to the PUSCH reception, and
wherein the BS performs the PUSCH reception, assuming that the UE performs DMRS bundling maintaining power consistency and phase continuity within the TDW.

10. A base station (BS) for receiving an uplink channel from a user equipment (UE) in a wireless communication system, the BS comprising:
at least one transceiver;
at least one processor; and
at least one computer memory operably coupled to the at least one processor and storing instructions which, when executed, cause the at least one processor to perform operations,
wherein the operations include:
receiving a UE capability report including a maximum time domain window (TDW) length value for each of a plurality of platform types from the UE;
transmitting a configuration including at least one TDW length value related to a physical uplink shared channel (PUSCH);
transmitting scheduling information related to a PUSCH transmission;
determining a TDW for demodulation reference signal (DMRS) bundling based on the configuration and the scheduling information; and
performing the PUSCH reception based on the TDW,
wherein the PUSCH transmission includes a DMRS related to the PUSCH reception, and
wherein the operations include performing the PUSCH reception, assuming that the UE performs DMRS bundling maintaining power consistency and phase continuity within the TDW.

11. The BS of claim 10, wherein the scheduling information includes information regarding one of the at least one TDW length value.

12. The BS of claim 11, wherein the scheduling information is included in downlink control information (DCI) carried by a physical downlink control channel (PDCCH).

13. The BS of claim 10, wherein each of the plurality of platform types is determined based on a satellite orbit.

14. The BS of claim 10, wherein the operations include:
transmitting ephemeris information regarding the BS; and
assuming that the DMRS bundling is terminated, while a position of the UE relative to the BS or a position of the BS corresponds to a predetermined position range based on the ephemeris information.
